# EUROPÄISCHE PATENTSCHRIFT

(11) **EP 2 449 019 B1**
(45) Veröffentlichungstag und Bekanntmachung des Hinweises auf die Patenterteilung: **01.01.2014**
(21) Anmeldenummer: 10740496.4
(22) Anmeldetag: 05.07.2010
(51) Int. Cl.: C08K 5/5398, C07F 9/6571

(54) **NEUE DERIVATE VON 9,10-DIHYDRO-9-OXA-10-PHOSPHAPHENANTHREN-10-ON**
NOVEL DERIVATIVES OF 9,10-DIHYDRO-9-OXA-10-PHOSPHAPHENANTHREN-10-ONE
NOUVEAUX DÉRIVÉS DE 9,10-DIHYDRO-9-OXA-10-PHOSPHAPHÉNANTHRÈNE-10-ONE

(30) Priorität: 03.07.2009 AT 10442009; 09.04.2010 AT 5702010
(43) Veröffentlichungstag der Anmeldung: 09.05.2012
(73) Patentinhaber: Krems Chemie Chemical Services AG, 3500 Krems (AT)
(72) Erfinder: ZICH, Thomas, A-4020 Linz (AT); ARTNER, Johannes, A-1110 Wien (AT); MEHOFER, Bernadette, A-3500 Krems (AT); DÖRING, Manfred, 76744 Wörth am Rhein (DE); CIESIELSKI, Michael, 06217 Merseburg (DE); ZWICK, Gilbert, 76768 Berg (DE); RAKOTOMALALA, Muriel, 68789 St. leon-Rot (DE)
(74) Vertreter: Ellmeyer, Wolfgang
(86) Internationale Anmeldenummer: PCT/AT2010/000247
(87) Internationale Veröffentlichungsnummer: WO 2011/000019

(56) Entgegenhaltungen:
- WO-A1-2006/027241
- WO-A2-2009/035881
- DE-A1- 2 034 887
- DE-A1- 10 338 131
- DE-A1-102008 014 117
- JP-A- 2001 270 993
- US-A- 4 198 492
- US-A1- 2006 074 154

## Beschreibung

Die vorliegende Erfindung betrifft neue Derivate von 9,10-Dihydro-9-oxa-10-phosphaphenanthren-10-on bzw. -10-oxid, Verfahren zu deren Herstellung sowie deren Verwendung als Flammschutzmittel.

### STAND DER TECHNIK

### 9,10-Dihydro-9-oxa-10-phosphaphenanthren-10-on bzw. -10-oxid (DOPO)

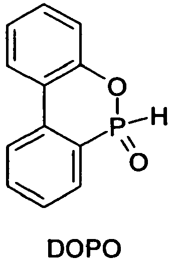

ist ein seit den frühen 1970er-Jahren bekanntes und gebräuchliches Flammschutzmittel und wurde erstmals von Sanko Chemical Co. Ltd. in der DE 20 34 887 beschrieben. In diesem Dokument wird allgemein eine Gruppe von 9,10-Dihydro-9-oxa10-phosphaphenanthren-Derivaten der folgenden Formeln offenbart: 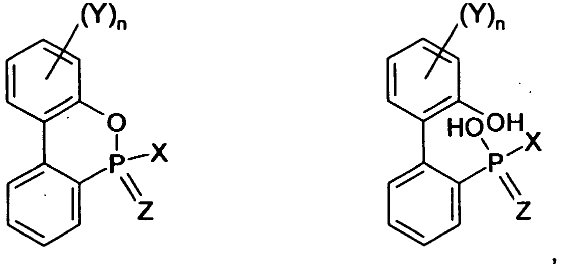 wobei die Verbindungen der letzteren Formel die Produkte ringöffnender Hydrolyse sind und worin die Symbole folgende Bedeutung haben:
Z ist Sauerstoff, Schwefel oder nicht vorhanden;
X ist Wasserstoff, Chlor, Methyl oder Phenoxy;
Y ist Wasserstoff, Chlor oder C₁₋₄-Alkyl; und
n = 0, 1 oder 2.

Weiters wird in diesem Dokument die Darstellung der Verbindungen durch Umsetzung von o-Phenylphenol-Derivaten mit Phosphortrichlorid, Triphenylphosphit, Phenoxydichlorphosphin oder Diphenoxychlorphosphin sowie ihre Verwendung (unter anderem) als Flammschutzmittel offenbart. Als einziges schwefelhältiges Derivat wird in den Beispielen "DOPS-OPh" gemäß folgender Reaktion hergestellt und analysiert:

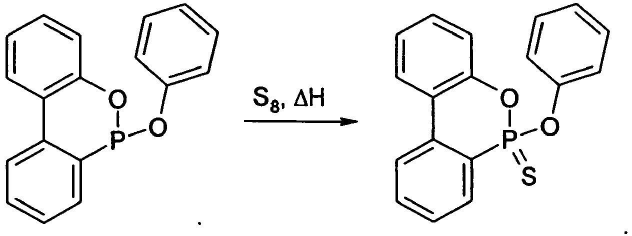

Dabei steht die Abkürzung "DOPS" für das Schwefelanalog von DOPO, d.h. für 9,10-Dihydro-9-oxa-10-phosphaphenanthren-10-sulfid bzw. -10-thion:

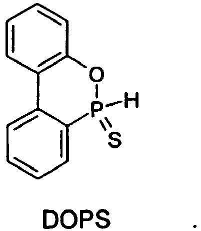

Seitdem wurde eine Vielzahl von Derivaten auf Basis des Oxaphosphaphenanthren-Ringsystems zur Verwendung als Brandschutzmittel in der Patentliteratur beschrieben. So offenbaren Shinichi et al. in US 4.198.492 (an Asahi Dow) die Verwendung von DOPO-Derivaten der nachstehenden Formel als Brandschutzmittel in Polyphenylenether-Harzen: 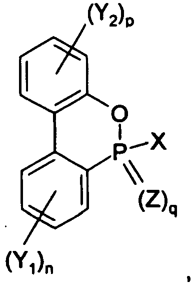 worin die Symbole die folgende Bedeutung haben:
Z ist Sauerstoff oder Schwefel;
q = 0 oder1;
X ist Wasserstoff, eine Hydroxylgruppe, eine Aminogruppe, ein Halogenatom, C₁₋₁₀-Alkyl, C₁₋₁₀-Alkoxy, C₁₋₁₀-Alkylthio oder gegebenenfalls hydroxysubstituiertes C₆₋₁₀-Aryloxy;
Y₁ und Y₂ stehen für C₁₋₈-Alkyl, C₁₋₈-Alkoxy oder eine Arylgruppe; und
n und p sind ganze Zahlen von 0 bis 4.

Als konkrete Beispiele für Verbindungen mit Z = Schwefel werden Derivate mit X = H, Alkoxy und Aryloxy genannt, darunter explizit auch DOPS. Als einziges schwefelhältiges Derivat wird jedoch die folgende Verbindung erwähnt:

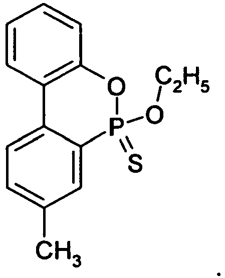

Diese Substanz wird jedoch nicht näher charakterisiert, sondern lediglich in eine Harzmischung eingearbeitet, deren Eigenschaften untersucht wurden, wobei unter anderem ein durchschnittliches Ergebnis bei der Flammzeitmessung erzielt wurde.

Das Derivat "DOPS-Cl" 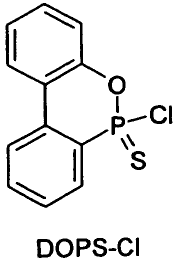 wird ebenfalls in mehreren Dokumenten offenbart. So beschreiben Chernyshev et al., Zhurnal Obshchei Khimii 42(1), 93-6 (1972), die Umsetzung von DOP-Cl mit Schwefel zu DOPS-Cl, und Bhatia et al., Chemistry & Industry 24, 1058 (1975), beschreiben die Darstellung von DOPS-Cl ausgehend von PSCl₃ und o-Phenylphenol.

US 2008/153950 (The Dow Chemical Company) offenbart allgemein die Verwendung von Phosphor-Schwefel-Verbindungen der nachstehenden Formel als Flammschutzmittel in Polymeren: 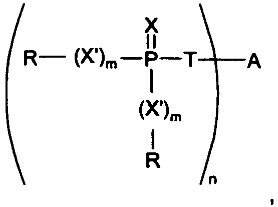 worin X und X' Sauerstoff oder Schwefel sind; m = 0, 1 oder 2 ist; T eine kovalente Bindung, Sauerstoff, Schwefel oder -NR⁴- ist; wobei zumindest einer von X und T Schwefel ist; die R gegebenenfalls miteinander verbundene Kohlenwasserstoffgruppen sind; A eine organische Linkergruppe ist; und n eine ganze Zahl von zumindest 1, vorzugsweise zumindest 2, ist. Vorzugsweise entsprechen die Verbindungen den folgenden Formeln: 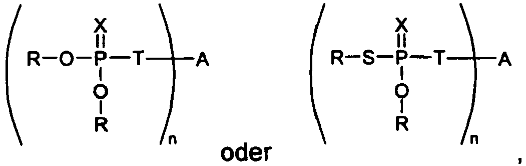 wobei in manchen Ausführungsformen auch die folgende Struktur möglich ist:

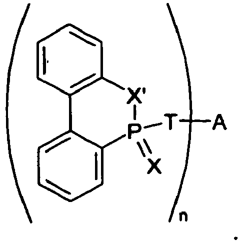

Die organische Linkergruppe A kann dabei ein n-wertiger, unverzweigter oder verzweigter, gegebenenfalls substituierter Alkylenrest sein, der mitunter auch Phosphor enthalten kann. Als kurzkettiges Beispiel für einen zweiwertigen Linker wird mehrmals die Gruppe -CH₂-CH=CH-CH₂- (2-Butenylen) angeführt. Die Synthese solcher zuletzt gezeigter Phosphaphenanthrenderivate mit X und X' = O und T = S erfolgt durch Umsetzung von DOPO mit elementarem Schwefel und Halogenderivaten des jeweiligen Linkers. Phosphaphenanthrenderivate mit X oder X' = S werden nicht konkret beschrieben oder gar hergestellt.

Die WO 2009/035881 von Dow Global Technologies offenbart flammhemmende Polymer-Zusammensetzungen, in denen diverse phosphorhältige Verbindungen als wirksame Bestandteile zum Einsatz kommen. In diesem Zusammenhang wird hauptsächlich die Struktur einer großen Anzahl an Verbindungen mit vier an Phosphor gebundenen Heteroatomen, die entweder Sauerstoff oder Schwefel sind, d.h. genauer gesagt Salze und Ester von Phosphorsäure sowie diverser Thio- und Thionphosphorsäuren, mitunter in polymerer Form, beschrieben.

Darunter findet sich auch die Struktur von Dimeren von DOPS, in der zwei DOPS-Moleküle anstelle des Wasserstoffs über eine Sulfid- oder Disulfidbrücke miteinander verknüpft sind (d.h. "DOPS-S-DOPS" bzw. "DOPS-S₂-DOPS"), sowie Analoge davon, in denen der Sauerstoff des Dihydrooxaphosphaphenanthrens (DOP) durch Schwefel ersetzt ist, d.h. Dihydrophosphasulfaphenanthren- (DPS-) Derivate (sozusagen "DPSS-S-DPSS" bzw. "DPSS-S₂-DPSS"). In der WO 2009/035881 wurde jedoch kein einziges DOPO-Derivat tatsächlich hergestellt (und somit auch nicht charakterisiert), sondern ausschließlich nichtaromatische Verbindungen.

Aus der Literatur ist somit bekannt, dass DOPO und verschiedene Derivate davon gute Flammschutzeigenschaften aufweisen, wobei diese Wirkung darauf zu beruhen scheint, dass diese Verbindungen beim Erhitzen phosphorhaltige Radikale freisetzen (siehe z.B. Seibold et al., J. Appl. Polym. Sci. 105(2), 685-696 (2007)). Dennoch wäre es wünschenswert, neue Substanzen mit weiter gesteigerter Flammschutzwirkung zur Verfügung zu haben, insbesondere solche, die die Gasphasenaktivität verbessern.

Die Herstellung weiterer Derivate kann beispielsweise ausgehend von DOP-Cl erfolgen. Hierzu beschreiben Ciesielski et al., Polymers for Advanced Technologies 19, 507 (2008), die Darstellung von DOP-NHPr ausgehend von DOP-Cl. Weitere, allgemeinere Reaktionen von Phosphiten, Alkyl- und Chlorphosphiten werden beispielsweise in den folgenden Literaturstellen erwähnt: US 2.805.241 (Ciba) beschreibt die Umsetzung von Dialkyl- und Diarylchlorophosphiten mittels Schwefelwasserstoff und stöchiometrischer Mengen an Base. US 4.220.472 (Sandoz) beschreibt die Hydrolyse der Gruppierung CI-P=S. Auf diesem Weg wird unter anderem das im Handel von Clariant erhältliche Flammschutzmittel Sandoflam^{®} hergestellt. Kabatschnik et al., Chem. Zentralbl.127, 11232 (1956), und Borecki et al., J. Chem. Soc. 1958, 4081-4084, beschreiben wiederum die Umsetzung der Gruppierung H-P=O mit Schwefel. Und Seeberger et al., Tetrahedron 55(18), 5759-5772 (1999), zeigen exemplarisch sowohl die Umsetzung der Gruppierung H-P=S mit Schwefel als auch deren Oxidation mit Iod in Kombination mit Wasser.

In WO 99/10429 (Albemarle) wird allgemein offenbart, dass die kombinierte Verwendung von - mitunter auch schwefelhältigen - Organophosphorverbindungen und elementarem Schwefel als Flammschutzmittel in styrenischen Polymeren verbesserte Brandschutzeigenschaften bewirkt. DOPO und seine Derivate werden hier allerdings nicht erwähnt.

Ein Ziel der vorliegenden Efindung war daher die Bereitstellung neuer DOPO-Derivate mit verbesserten Flammschutzeigenschaften.

### OFFENBARUNG DER ERFINDUNG

Die Efinder haben im Zuge ihrer Forschungen festgestellt, dass eine Gruppe von Verbindungen, die der nachstehenden Formel I entsprechen: 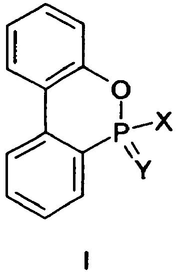 worin:
X aus Wasserstoff, OH und SH und Alkalimetall-, Erdalkalimetall-, Ammonium- und Phosphonium-Salzen davon, sowie zweiwertigen Linker-Gruppen Zₙ, die zwei gleiche oder unterschiedliche Dihydrooxaphosphaphenanthrenyl-Reste miteinander zu einem Dimer der folgenden Formel II verbinden, ausgewählt ist: 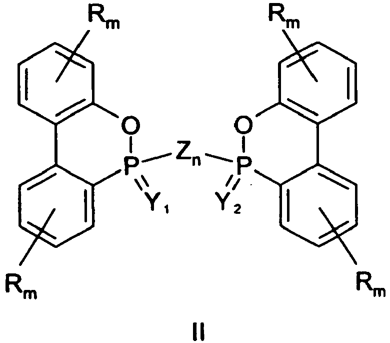
Y, Y₁, Y₂ und Z jeweils unabhängig voneinander ein Sauerstoffatom oder ein Schwefelatom darstellen;
mit der Maßgabe, dass in Formel I zumindest eines von X und Y und in Formel II zumindest eines von Y₁, Y₂ und Z ein Schwefelatom darstellt bzw. enthält;
n eine ganze Zahl von zumindest 1 ist, wobei, wenn Z ein Sauerstoffatom ist, n = 1 ist, und wenn Z ein Schwefelatom ist, n = 1 bis 8 ist;
die Reste R jeweils unabhängig voneinander eine gegebenenfalls substituierte Alkyl-, Alkoxy- oder Alkylthiogruppe mit 1 bis 8 Kohlenstoffatomen oder eine gegebenenfalls substituierte Arylgruppe darstellen; und
die m jeweils unabhängig voneinander für eine ganze Zahl von 0 bis 4 stehen;
gegenüber DOPO und anderen Vergleichssubstanzen erhöhte Flammschutzwirkung entwickeln. Auch ringgeöffnete Hydrolysate solcher Verbindungen, wie oben erwähnt, zeigen flammhemmende Eigenschaften.

Mit solchen neuen Verbindungen konnten die Erfinder, insbesondere in Kombination mit Kunststoffen, verbesserte Flammschutzwirkung erzielen, die unter anderem - ohne sich auch eine Theorie festlegen zu wollen - auf erhöhter Gasphasenaktivität beruht. Darüber hinaus zeigen die neuen Verbindungen synergistische Wirkung als Flammschutzmittel in Kombination mit elementarem Schwefel und anderen schwefelhältigen Verbindungen. Dies wird durch die später folgenden Ausführungsbeispiele eindeutig belegt.

Unter dem "Alkyl"-Anteil der optionalen Substituenten R der erfindungsgemäßen Verbindungen sind hierin sowohl gesättigte als auch ungesättigte Aliphaten zu verstehen, die unverzweigt oder verzweigt sein können, wobei ungesättigte Gruppen bevorzugt sind. Die Substituenten R umfassen vorzugsweise kurzkettige Alkylgruppen mit nicht mehr als 6, noch bevorzugter nicht mehr als 4 oder 3, noch bevorzugter nicht mehr als 2, Kohlenstoffatomen bzw. Phenyl als Arylgruppe, und m ist vorzugsweise 0 bis 2, da längerkettige Reste, ein hoher Sättigungsgrad sowie eine größere Anzahl an Substituenten die Flammschutzwirkung nachteilig beeinflussen können. Besonders bevorzugt ist m = 0, d.h. die erfindungsgemäßen Verbindungen sind besonders bevorzugt unsubstituiert.

Falls Substituenten R vorhanden sind, weisen diese vorzugsweise einen schwefelhältigen Substituenten, wie z.B. -SH, -SO₃NH₄, -SO- oder -SO₂-, oder einen phosphorhältigen Substituenten, wie z.B. -PO(ONH₄)₂ oder dergleichen, auf, um so die Flammschutzwirkung weiter zu verbessern.

Von den optionalen Salzen etwaiger SH- oder OH-Gruppen der erfindungsgemäßen Verbindungen sind Ammonium- und Phosphoniumsalze bevorzugt, da diese ebenfalls zur Flammschutzwirkung beitragen können. Die Ammonium- und PhosphoniumIonen können anstelle von Wasserstoffatomen jeweils bis zu vier organische Reste, z.B. oben definierte Substituenten R, aufweisen (d.h. NR₄⁺ bzw. PR₄⁺), wobei jedoch im Falle von Ammonium Wasserstoff als Substituent bevorzugt wird.

Konkret betrifft die Erfindung in einem ersten Aspekt mehrere neue 9,10-Dihydro-9-oxa-10-phosphaphenanthren-Derivate der Formel I 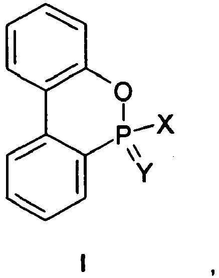 nämlich eine Verbindung der Formel I, worin X Wasserstoff ist und Y Schwefel ist, d.h. 9,10-Dihydro-9-oxa-10-phosphaphenanthren-10-thion bzw. -10-sulfid ("DOPS"): 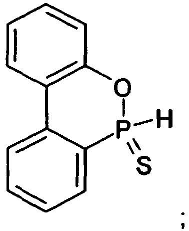 eine Verbindung der Formel I, worin X OH ist und Y Schwefel ist, d.h. 9,10-Dihydro-10-hydroxy-9-oxa-10-phosphaphenanthren-10-thion bzw. -10-sulfid ("DOPS-OH"): 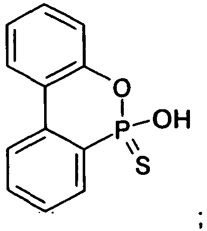 eine Verbindung der Formel I, worin X ONH₄ ist und Y Schwefel ist, d.h. 9,10-Dihydro-10-hydroxy-9-oxa-10-phosphaphenanthren-10-thion- bzw. -10-sulfid-ammoniumsalz ("DOPS-ONH₄"): 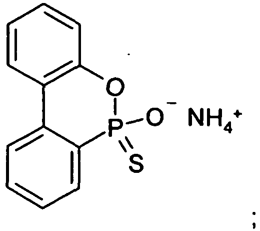 eine Verbindung der Formel I, worin X SH ist und Y Schwefel ist, d.h. 9,10-Dihydro-10-mercapto-9-oxa-10-phosphaphenanthren-10-thion bzw. -10-sulfid ("DOPS-SH"): 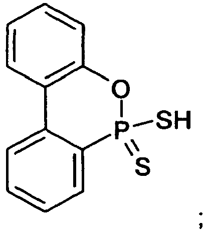 eine Verbindung der Formel I, worin X SNH(Et)₃ ist und Y Schwefel ist, d.h. 9,10-Dihydro-10-mercapto-9-oxa-10-phosphaphenanthren-10-thion- bzw. -10-sulfid-triethylammoniumsalz ("DOPS-SNH(Et)₃"): 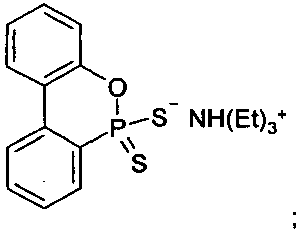 eine Verbindung der Formel I, worin X ONH(Et)₃ ist und Y Schwefel ist, d.h. 9,10-Dihydro-10-hydroxy-9-oxa-10-phosphaphenanthren-10-thion- bzw. -10-sulfid-triethylammoniumsalz ("DOPS-ONH(Et)₃"): 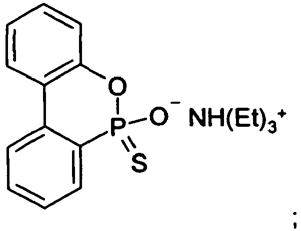 eine Verbindung der Formel I, worin X OMeI ist und Y Schwefel ist, d.h. 9,10-Dihydro-10-hydroxy-9-oxa-10-phosphaphenanthren-10-thion- bzw. -10-sulfid-melaminiumsalz ("DOPS-OMeI"): 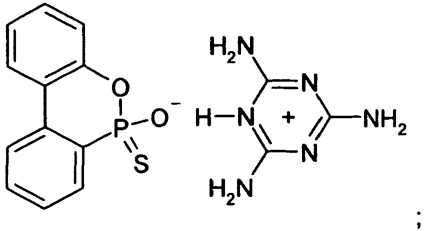 und
eine Verbindung der Formel I, worin X OGua ist und Y Schwefel ist, d.h. 9,10-Dihydro-10-hydroxy-9-oxa-10-phosphaphenanthren-10-thion- bzw. -10-sulfid-guanidiniumsalz ("DOPS-OGua"): 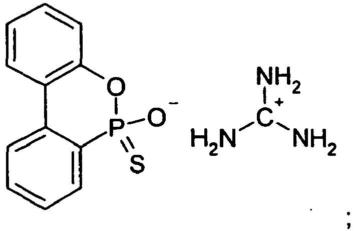 sowie mehrere neue 9,10-Dihydro-9-oxa-10-phosphaphenanthren-Derivate der Formel I, worin X eine zweiwertige Linker-Gruppe Zₙ ist, die zwei Dihydrooxaphosphaphenanthrenyl-Reste der Formel I zu einem Dimer der Formel II verbindet 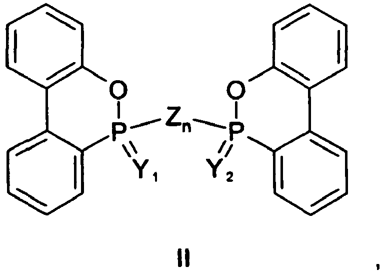 nämlich eine Verbindung der Formel II, worin Y₁ und Y₂ jeweils Sauerstoff sind, Z Schwefel ist und n = 1 ist, d.h. Bis(9,10-dihydro-9-oxa-10-oxo-10-phosphaphenanthren-10-yl)sulfid ("DOPO-S-DOPO"): 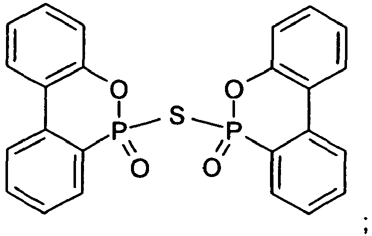 eine Verbindung der Formel II, worin Y₁ und Z jeweils Schwefel sind, Y₂ Sauerstoff ist und n = 1 ist, d.h. 9,10-Dihydro-10-(9,10-dihydro-9-oxa-10-phospha-10-thioxophenanthren-10-ylthio)-9-oxa-10-phosphaphenanthren-10-on bzw. -10-oxid ("DOPS-S-DOPO"): 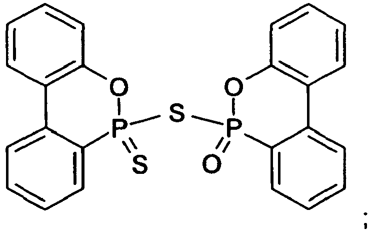 eine Verbindung der Formel II, worin Y₁, Y₂ und Z jeweils Schwefel sind und n = 1 ist, d.h. Bis(9,10-dihydro-9-oxa-10-phospha-10-thioxophenanthren-10-yl)sulfid ("DOPS-S-DOPS"): 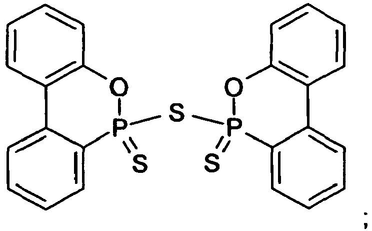 eine Verbindung der Formel II, worin Y₁, Y₂ und Z jeweils Schwefel sind und n = 2 ist, d.h. Bis(9,10-dihydro-9-oxa-10-phospha-10-thioxophenanthren-10-yl)disulfid ("DOPS-S₂-DOPS"): 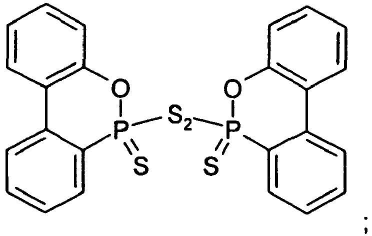 eine Verbindung der Formel II, worin Y₁, Y₂ und Z jeweils Schwefel sind und n = 4 ist, d.h. Bis(9,10-dihydro-9-oxa-10-phospha-10-thioxophenanthren-10-yl)tetrasulfid ("DOPS-S₄-DOPS"): 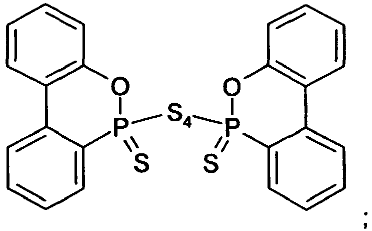 eine Verbindung der Formel II, worin Y₁ und Y₂ jeweils Schwefel sind, Z Sauerstoff ist und n = 1 ist, d.h. Di(9,10-dihydro-9-oxa-10-phospha-10-thioxophenanthren-10-yl)-ether ("DOPS-O-DOPS"): 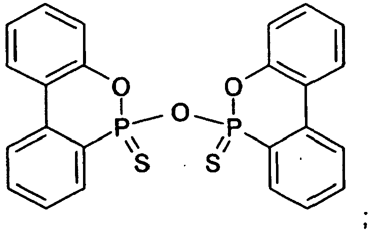 und
eine Verbindung der Formel II, worin Y₁ Schwefel ist, Y₂ und Z jeweils Sauerstoff sind und n = 1 ist, d.h. 9,10-Dihydro-10-(9,10-dihydro-9-oxa-10-phospha-10-thioxophenanthren-10-yloxy)-9-oxa-10-phosphaphenanthren-10-on bzw. -10-oxid ("DOPS-O-DOPO"):

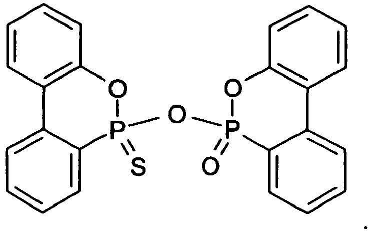

Da der zyklische Phosphon- bzw. Phosphinsäureester der erfindungsgemäßen Verbindungen der Formeln I und II vom Fachmann unter geeigneten Bedingungen leicht hydrolysierbar ist, liegen auch "ringgeöffnete Hydrolysate" im Schutzumfang der Erfindung. Darunter sind demzufolge Verbindungen zu verstehen, in denen die folgende Struktur enthalten ist: 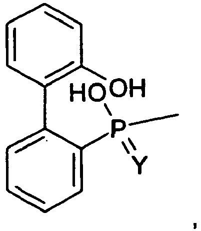 wobei diese Struktur auch in einer oder in beiden der Mortomereinheiten von Dimeren gemäß obiger Formel II vorkommen kann, so dass solche Dimere ebenfalls unter die Definition "ringgeöffnete Hydrolysate" fallen, zumal derartige Hydrolysate ebenfalls als Flammschutzmittel wirksam sein können.

Die Struktur mancher der obigen Verbindungen ist zwar von in der Literatur erwähnten Formeln umfasst, allerdings wurde bisher keine einzige davon explizit beschrieben, tatsächlich synthetisiert oder näher charakterisiert. So ist etwa DOPS von den Formeln in DE 20 34 887 und in US 4.198.492 umfasst, wobei jene im letzteren Dokument auch DOPS-OH umfasst. Wie einleitend erwähnt, wurden auch die Strukturen DOPS-S-DOPS und DOPS-S₂-DOPS in der WO 2009/035881 bereits beschrieben, allerdings wurden diese Verbindungen offenbar nicht synthetisiert oder näher charakterisiert. Dies ist erst den Erfindern des vorliegenden Anmeldungsgegenstands gelungen, die auch herausgefunden haben, dass die hierin beschriebenen neuen Verbindungen gegenüber anderen, verwandten Vertretern der offenbarten Verbindungsgruppen verbesserte Flammschutzeigenschaften und dabei synergistische Wirkung mit elementarem Schwefel und anderen schwefelhältigen Verbindungen aufweisen.

In einem zweiten Aspekt betrifft die Erfindung daher die Verwendung der obigen neuen Verbindungen, alleine oder als Gemisch mehrerer davon, als Flammschutzmittel, vorzugsweise in Kombination mit elementarem Schwefel und/oder einer weiteren schwefelhältigen Verbindung, vorzugsweise einer Verbindung mit zumindest einer S-S-Bindung, wobei zumindest eines der Schwefelatome in zweiwertiger Form vorliegt, um sich so die festgestellte synergistische Wirkung zunutze zu machen. Die Verbindungen können entweder alleine als Flammschutzadditiv, z.B. in Kunststoffmassen, eingesetzt werden, wobei sie vorzugsweise in einem Anteil von 0,1 bis 25 Gew.%, vorzugsweise 3 bis 10 Gew.%, vorliegen, oder aber als Bestandteil einer Flammschutzzusammensetzung, die darüber hinaus beliebige weitere, üblicherweise in solchen Zusammensetzungen enthaltene Komponenten umfassen kann. Dazu zählen beispielsweise organische Peroxide (z.B. Dicumylperoxid), Metallhydroxide, Stickstoffverbindungen (z.B. Melamine), Nanopartikel usw.

In bevorzugten Ausführungsformen wird die zumindest eine erfindungsgemäße Verbindung als Flammschutzmittel für natürliche und künstliche Polymere eingesetzt, da auf diesem Gebiet besonders gute Ergebnisse erzielt wurden, wie die späteren Beispiele belegen.

In einem dritten Aspekt betrifft die Erfindung eine Flammschutzzusammensetzung, die zumindest eine erfindungsgemäße Verbindung als Flammschutzmittel umfasst, vorzugsweise eine Zusammensetzung, in der zusätzlich elementarer Schwefel und/ oder eine weitere schwefelhältige Verbindung enthalten ist/sind, um sich erneut den Synergismus zunutze zu machen.

In einem vierten Aspekt betrifft die Erfindung ein Herstellungsverfahren für die neuen Verbindungen, das dadurch gekennzeichnet ist, dass ein 9,10-Dihydro-9-oxa-10-phosphaphenanthren- (DOP-) Derivat, ausgewählt aus DOPO, DOP-Cl, DOPS, DOPS-Cl, DOP-NHPr, DOPS-SH, DOPS-OH und DOPS-SNH(Et)₃, mit elementarem Schwefel oder einer schwefelhältigen Verbindung zur gewünschten erfindungsgemäßen Verbindung umgesetzt wird.

Mittels derartiger Synthesen können die neuen Verbindungen in sehr guten Ausbeuten und ohne nennenswerte Bildung von Nebenprodukten wie Hydrolysaten oder Zersetzungsprodukten erhalten werden. Darüber hinaus sind weniger aufwändige Reinigungsschritte vonnöten, da Reste der bei der Herstellung eingesetzten Reaktionspartner, d.h. Reste von elementarem Schwefel oder Schwefelverbindungen, die Flammschutzwirkung nicht beeinträchtigen, sondern im Gegenteil sogar synergistisch verstärken. Die bevorzugten Reaktionen zum Erhalt der erfindungsgemäßen Verbindungen sind nachstehend angegeben.

Die Umsetzung von DOP-Cl mit Schwefelwasserstoff zu DOPS:

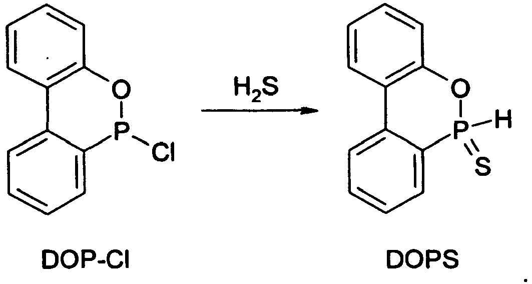

Die Umsetzung von DOPO mit Lawesson-Reagenz oder P₂S₅ zu DOPS: 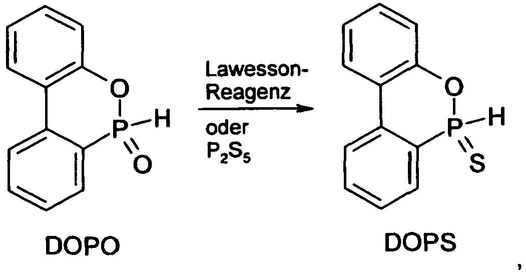 wobei das Lawesson-Reagenz folgende Struktur hat:

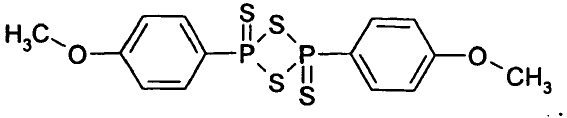

Die Umsetzung von DOPS-OH mit wässrigem Ammoniak zu DOPS-ONH₄:

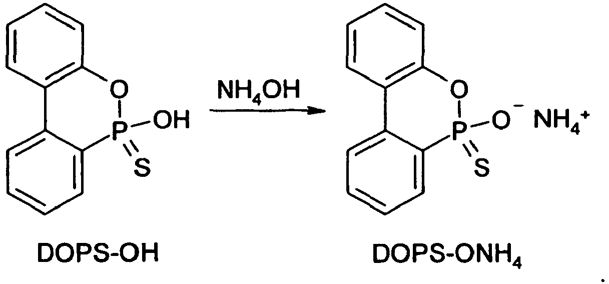

Die Umsetzung von DOPO mit elementarem Schwefel zu DOPS-OH:

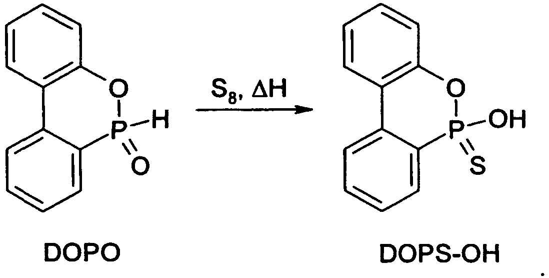

Die Umsetzung von DOPO mit Ammoniumthiosulfat zu DOPS-ONH₄:

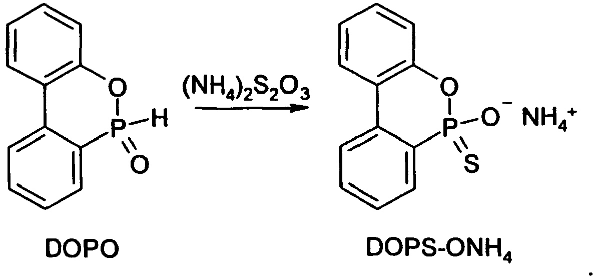

Die Umsetzung von DOPS mit elementarem Schwefel zu DOPS-SH:

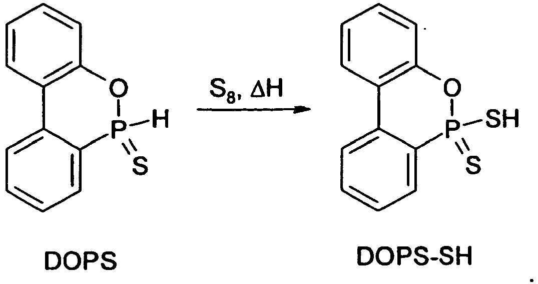

Die Umsetzung von DOPO mit N,N'-Dicaprolactamdisulfid (Bis(hexahydro-2-oxo-2H-azepin-1-yl)disulfid) zu einem Gemisch aus DOPO-S-DOPO und DOPS-S-DOPO:

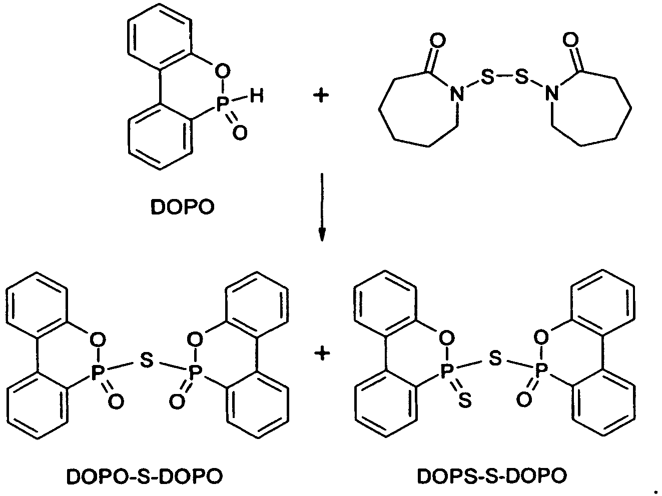

Die Umsetzung von DOPS mit Schwefel und Triethylamin zu DOPS-SNH(Et)₃:

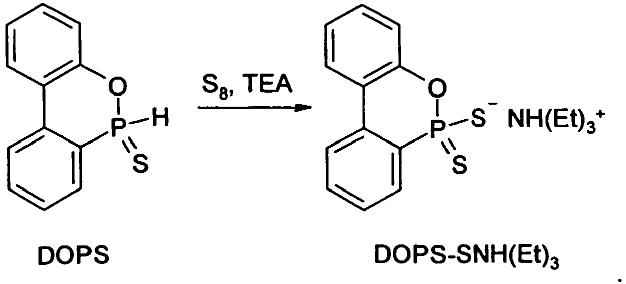

Die Umsetzung von DOPS-Cl mit Schwefel und Triethylamin zu DOPS-SNH(Et)₃:

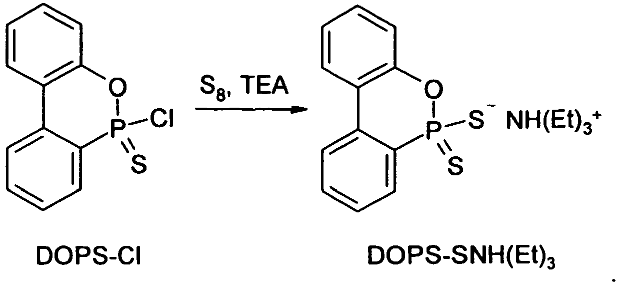

Die Umsetzung von DOPS-OH mit Triethylamin zu DOPS-ONH(Et)₃:

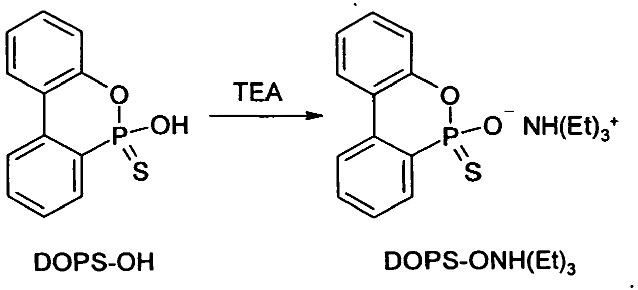

Die Umsetzung von DOPS-OH mit Melamin zu DOPS-OMeI:

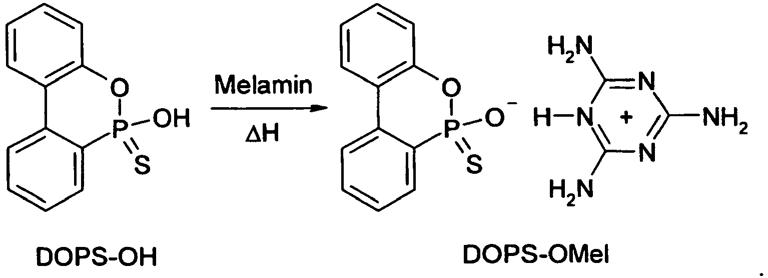

Die Umsetzung von DOPS-OH mit Guanidincarbonat zu DOPS-OGua:

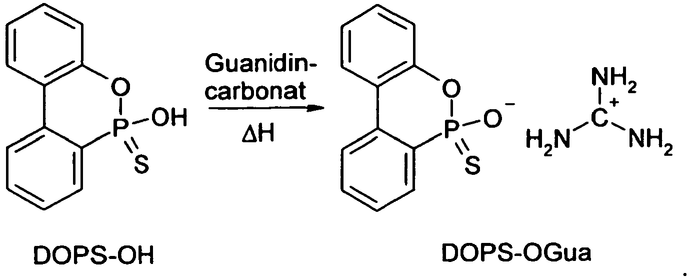

Die Dimerisierung von DOPS-SH zu DOPS-S-DOPS:

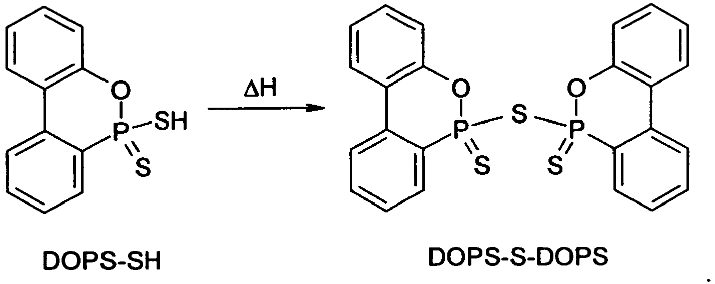

Die Umsetzung von DOPS-SNH(Et)₃ mit Wasserstoffperoxid unter gleichzeitiger Dimerisierung zu DOPS-S₂-DOPS:

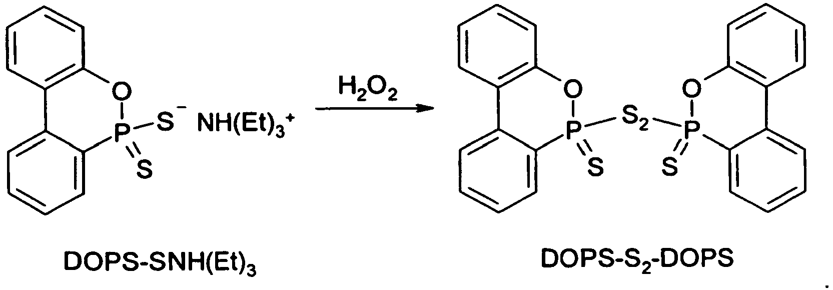

Die Umsetzung von DOPS-SNH(Et)₃ mit Dischwefeldichlorid zu DOPS-S₄-DOPS:

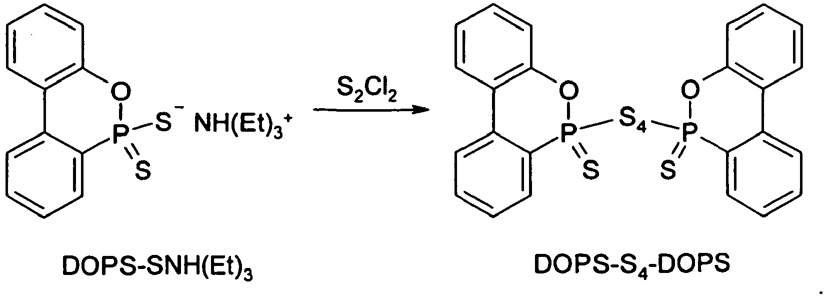

Die Umsetzung von DOP-Cl mit DOPS-OH und Triethylamin und in weiterer Folge mit elementarem Schwefel zu DOPS-O-DOPS:

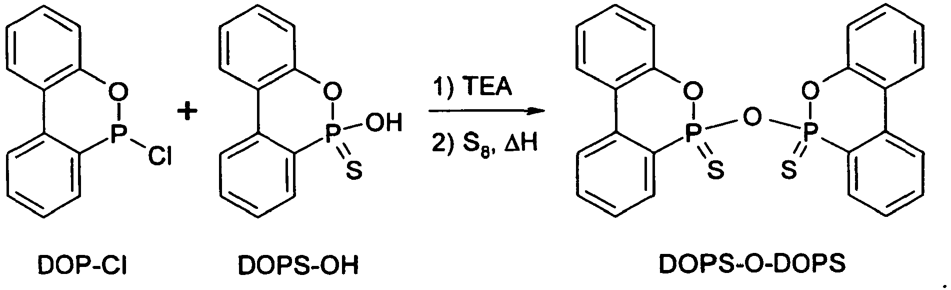

Die Umsetzung von DOP-Cl mit DOPO-OH und Triethylamin und in weiterer Folge mit elementarem Schwefel zu DOPS-O-DOPO:

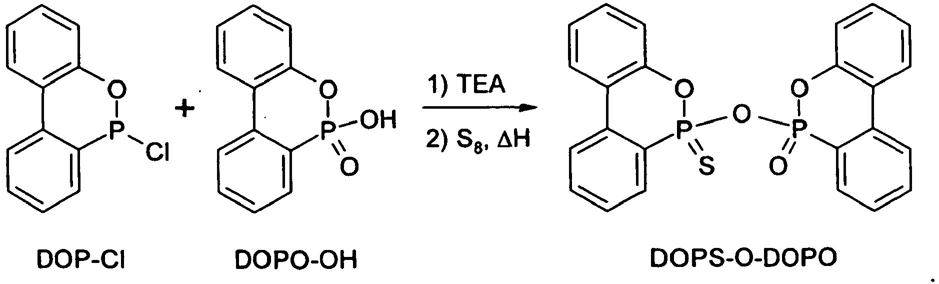

Die Umsetzung von DOP-Cl mit DOPS-SNH(Et)₃ und in der Folge mit elementarem Schwefel zu DOPS-S-DOPS:

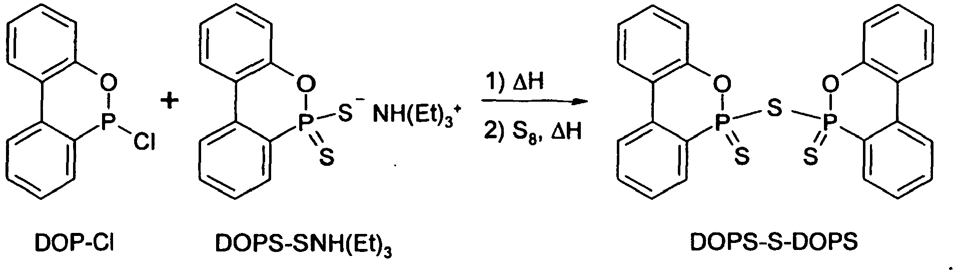

Schließlich betrifft die Erfindung auch noch ein alternatives Verfahren zur Herstellung von 9,10-Dihydro-10-mercapto-9-oxa-10-phosphaphenanthren-10-thion bzw. -10-sulfid ("DOPS-SH"), bei dem DOPS-SNH(Et)₃ mit HCl zu DOPS-SH hydrolysiert wird:

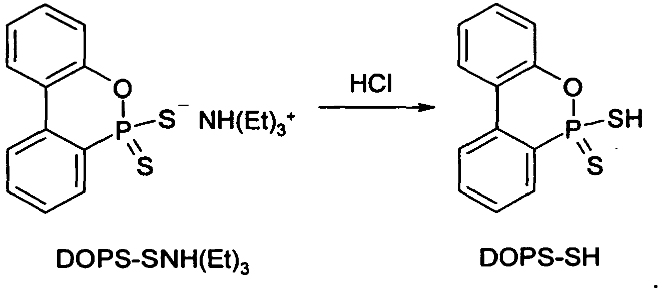

Die erfindungsgemäßen neuen Verbindungen können freilich auch auf anderen Wegen erhalten werden, wobei ein durchschnittlicher Fachmann - unter Berücksichtigung der speziellen Phosphorinchemie - eine Reihe von alternativen Synthesewegen ermitteln können sollte, und zwar sowohl solche, die bereits von einem DOP-Derivat ausgehen, als auch auch solche, bei denen der Dihydrooxaphosphaphenanthren-Grundkörper erst noch auszubilden ist, z.B. ähnlich jener in DE 20 34 887 offenbarten Synthese ausgehend von o-Phenylphenol. Beispielhafte Synthesen, die bereits von DOP-Derivaten ausgehen, sind nachstehend angeführt. Weitere, alternative Synthesewege für die hierin offenbarten Verbindungen und die Synthese weiterer neuer Verbindungen der Formel I bzw. II sind Gegenstand derzeitiger Forschungen der Erfinder.

Die Umsetzung von DOPS-Cl mit einem Metallhydrid zu DOPS:

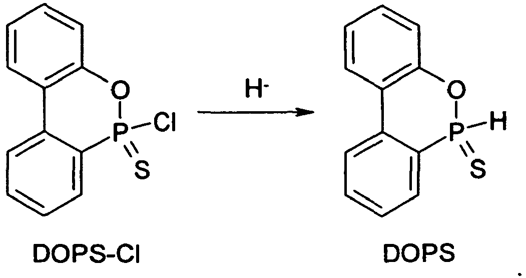

Die Umsetzung von DOPS-Cl mit Wasser oder wässriger Base zu DOPS-OH:

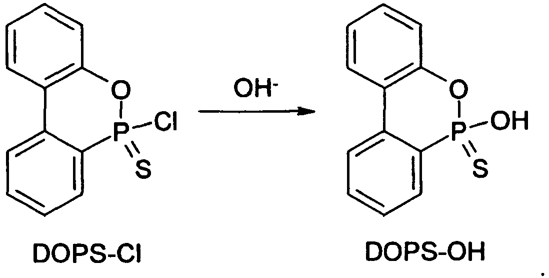

Die Umsetzung von DOPS mit einem organischen oder anorganischen Oxidationsmittel zu DOPS-OH:

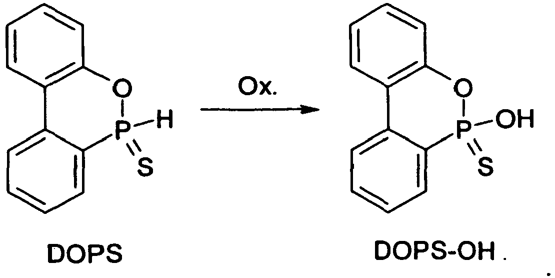

Die Umsetzung von DOPS-SH mit wässrigem Ammoniak zu DOPS-SNH₄:

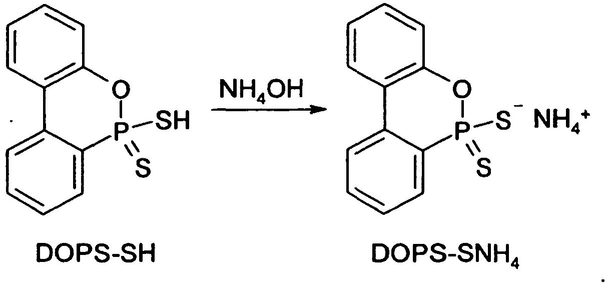

Alternativ kann DOPS-SH (und in analoger Weise auch DOPS-OH) aber auch mit verdünnten Lösungen von Alkali- oder Erdalkalimetallhydroxiden in die entsprechenden Metallsalze oder mit einer Lösung eines Phosphoniumsalzes, z.B. eines Tetraalkylphosphoniumhalogenids oder -phosphats (vorzugsweise in Gegenwart einer mittelstarken oder starken Hilfsbase) in die entsprechenden Phosphoniumsalze übergeführt werden, wobei jedoch darauf zu achten ist, dass es zu keiner Hydrolyse des zyklischen Esters kommt, falls dies nicht erwünscht ist, wiewohl - wie zuvor erwähnt - durchaus auch solche Hydrolysate der erfindungsgemäßen Verbindungen Flammschutzaktivität zeigen können.

Die Umsetzung von DOP-NHPr mit Schwefelwasserstoff zu DOPS:

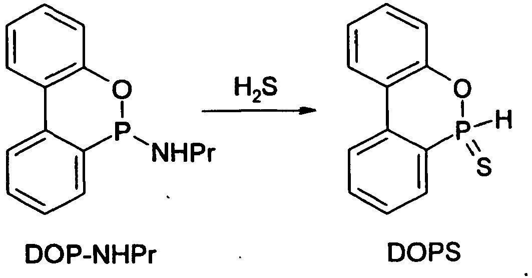

Die Umsetzung von DOPS-Cl mit Schwefelwasserstoff zu DOPS-SH:

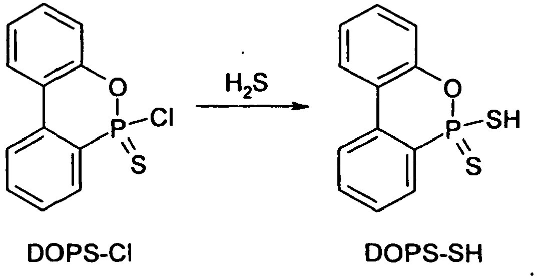

Die Umsetzung von DOPS-Cl mit Schwefelwasserstoff zu DOPS-S-DOPS:

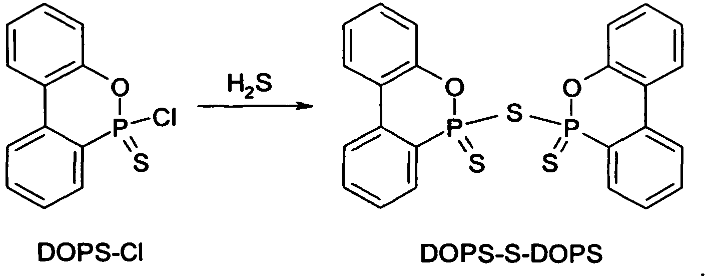

Die Umsetzung von DOPS-Cl mit Wasser zu DOPS-O-DOPS:

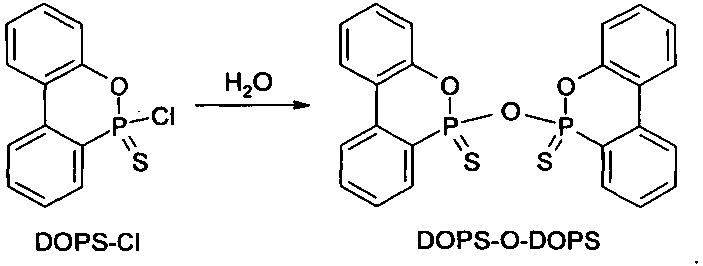

Die vorliegende Erfindung wird nachstehend anhand von Beispielen detaillierter beschrieben, die zu Illustrationszwecken angeführt werden und nicht als Einschränkung zu verstehen sind. Es werden darin die bevorzugten Synthesen der erfindungsgemäßen neuen Verbindungen sowie deren Einsatz als Flammschutzmittel detailliert beschrieben.

### BEISPIELE

### Synthesebeispiel 1

### Herstellung von 10-Chlor-9,10-dihydro-9-oxa-10-phosphaphenanthren (DOP-Cl)

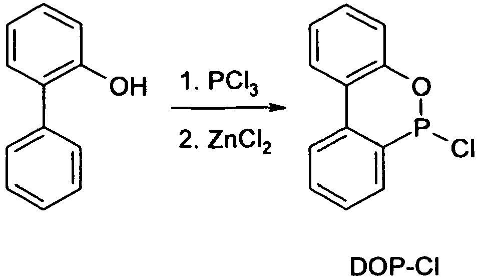

Dieses Ausgangsprodukt für die Synthese erfindungsgemäßer neuer Verbindungen wurde im Wesentlichen entsprechend der Literatur (DE 20 34 887) aus o-Phenylphenol mit PCl₃ und mittels Ringschluss des als Zwischenprodukt erhaltenen Dichlorphosphits unter Zinkchlorid-Katalyse hergestellt.
Ausbeute: 94 % d.Th.

### Synthesebeispiel 2

### Herstellung von 10-Chlor-9,10-dihydro-9-oxa-10-phosphaphenanthren-10-thion bzw. -10-sulfid (DOPS-Cl)

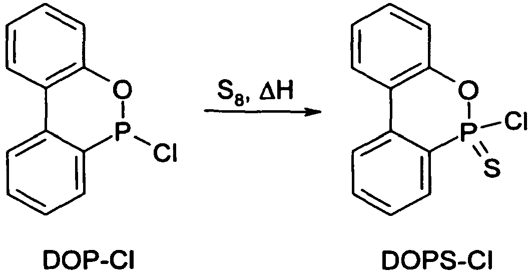

Dieses Ausgangsprodukt für die Synthese erfindungsgemäßer neuer Verbindungen wurde im Wesentlichen entsprechend der Literatur (Chernyshev et al., Zhurnal Obshchei Khimii 42(1), 93-6 (1972)) aus DOP-Cl mit elementarem Schwefel hergestellt. Ausbeute: 88 % d.Th.

### Synthesebeispiel 3

### Herstellung von 9,10-Dihydro-9-oxa-10-phospha-10-propylaminophenanthren (DOP-NHPr)

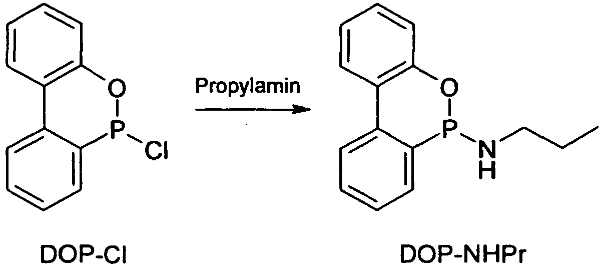

Dieses Ausgangsprodukt für die Synthese erfindungsgemäßer neuer Verbindungen wurde im Wesentlichen entsprechend der Literatur (Ciesielski et al., Polymers for Advanced Technologies 19, 507 (2008)) aus DOP-Cl und n-Propylamin hergestellt. Ausbeute: 91 % d.Th.

### Beispiel 1

### Herstellung von 9,10-Dihydro-9-oxa-10-phosphaphenanthren-10-thion bzw. -10-sulfid (DOPS)

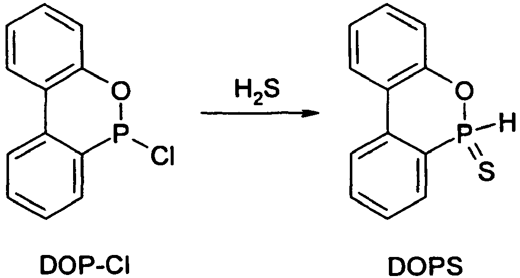

Unter Inertgasspülung wurden 28,1 g (0,12 mol) DOP-Cl in einen mit Gaseinleitrohr, Thermometer, Tropftrichter, mechanischem Rührwerk und Gasableitung ausgestatteten Rundkolben eingebracht, wonach 200 ml luft- und feuchtigkeitsfreies Toluol zugesetzt wurden. Nachdem sich das DOP-Cl vollständig gelöst hatte, wurde H₂S-Gas unter Rühren und Halten der Temperatur bei 25 bis 30 °C eingeleitet. Nach 2 h wurden 18,4 ml (13,4 g, 0,132 mol) Triethylamin zugegeben, was die Ausfällung eines weißen Feststoffs (Triethylamin-hydrochlorid) bewirkte. Nach weiteren 30 min wurde das Einleiten von H₂S-Gas beendet, und 1,5 h später wurde das Rührwerk angehalten. Anschließend wurde der Feststoff abfiltriert und das Toluol im Vakuum abdestilliert. Der verbleibende Rückstand wurde aus Acetonitril umkristallisiert. Dabei wurden 23,7 g (85 % d.Th.) DOPS als weißer, kristalliner Feststoff erhalten.
Fp.: 92-94 °C (Acetonitril)
³¹P-NMR (CDCl₃): 58,7 ppm
MS: 232 (C₁₂H₉OPS)
Elementaranalyse: ber. P 13,35 %, gef. P 13,21 %

### Beispiel 2

### Herstellung von 9,10-Dihydro-10-hydroxy-9-oxa-10-phosphaphenanthren-10-thion bzw. -10-sulfid (DOPS-OH)

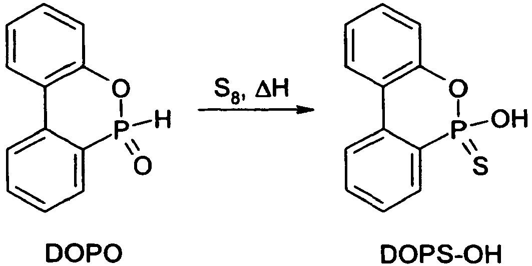

9,10-Dihydro-9-oxa-10-phosphaphenanthren-10-on bzw. -10-oxid (DOPO) wurde im Handel von der Schill + Seilacher AG, Böblingen, Deutschland, bezogen. 240 g (1,11 mol) DOPO und 96 g (3,0 mol) elementarer Schwefel wurden gründlich miteinander vermischt, das Gemisch wurde in einen Rundkolben gefüllt, und die Luft wurde mittels Inertgas (Argon oder Stickstoff) verdrängt. Anschließend wurde der Kolben mit den festen Ausgangsstoffen in einem auf 135°C voreingestellten Heizbad erhitzt. Nach 15 min wurde das Heizbad entfernt. Die entstandene gelbe Schmelze wurde in ein Stahlgefäß gegossen. Nach dem Abkühlen des Gemischs wurde der erhaltene Feststoff mechanisch zerkleinert und zusammen mit 500 ml Methanol erwärmt. Anschließend wurde der überschüssige Schwefel abfiltriert, und das Methanol wurde am Rotationsverdampfer unter Teilvakuum abdestilliert, wobei ein hellgelbes Rohprodukt erhalten wurde, das aus 700 ml Toluol umkristallisiert wurde. Das Toluol wurde im Vakuum entfernt, wobei 248,1 g (90 % d.Th.) DOPS-OH in Form von weißen Kristallen erhalten wurden.
Fp.: 149-151 °C (Toluol)
³¹P-NMR (CDCl₃): 72,2 ppm
MS: 248 (C₁₂H₉O₂PS)
Elementaranalyse: ber. P 12,49 %, gef. P 12,28 %

### Beispiel 3

### Herstellung von 9,10-Dihydro-10-hydroxy-9-oxa-10-phosphaphenanthren-10-thion-bzw. -10-sulfid-ammoniumsalz (DOPS-ONH₄)

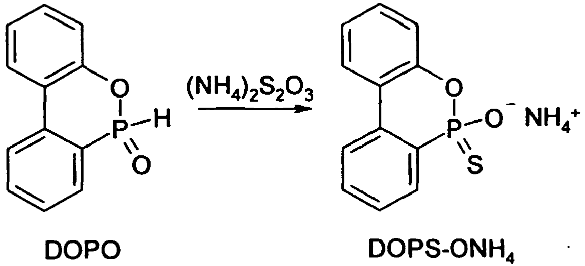

21,6 g (0,10 mol) DOPO und 14,8 g (0,10 mol) Ammoniumthiosulfat wurden gründlich vermischt, und das Gemisch wurde in einen Rundkolben übergeführt. Anschließend wurde der Kolben mit den festen Ausgangsstoffen in einem auf 160 °C voreingestellten Heizbad erhitzt. Nach 30 min wurde das Heizbad entfernt und das Reaktionsgemisch etwas abkühlen gelassen. Danach wurden 250 ml Ethanol zugesetzt und das Gemisch zum Sieden gebracht. Anschließend wurde der ungelöste Feststoff abfiltriert und das Filtrat im Vakuum eingedampft. Der Rückstand (ca. 20 g), der zu ca. 85 % aus DOPS-ONH₄ bestand, wurde aus Acetonitril umkristallisiert, was 19,1 g (75 % d.Th.) DOPS-ONH₄ in Form von weißen Kristallen erhalten.
Fp.: 238-239 °C (Zers.) (Acetonitril)
³¹P-NMR (CDCl₃/Ethanol): 60,1 ppm
MS: 248 (analog DOPS-OH)
Elementaranalyse: ber. P 11,69 %, gef. P 11,43 %

### Beispiel 4

### Herstellung von 9,10-Dihydro-10-hydroxy-9-oxa-10-phosphaphenanthren-10-thion-bzw. -10-sulfid-ammoniumsalz (DOPS-ONH₄)

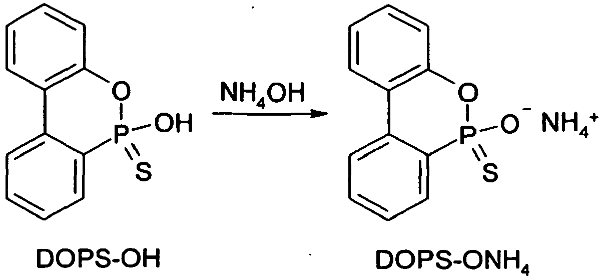

12,4 g (0,05 mol) DOPS-OH wurden unter leichtem Erwärmen in 50 ml Ethanol gelöst. Nach dem Abkühlen wurden 8 ml 25%ige Ammoniaklösung zugesetzt. Die Lösung wurde 1 h lang bei Raumtemperatur stehen gelassen, wonach das Ethanol im Vakuum entfernt wurde. Der Rückstand wurde aus Acetonitril umkristallisiert, wobei 11,5 g (90 % d.Th.) DOPS-ONH₄ in Form von weißen Kristallen erhalten wurden. Das so erhaltene Produkt war chemisch identisch mit jenem von Beispiel 3.

### Beispiel 5

### Herstellung von 9,10-Dihydro-10-mercapto-9-oxa-10-phosphaphenanthren-10-thion bzw. -10-sulfid (DOPS-SH)

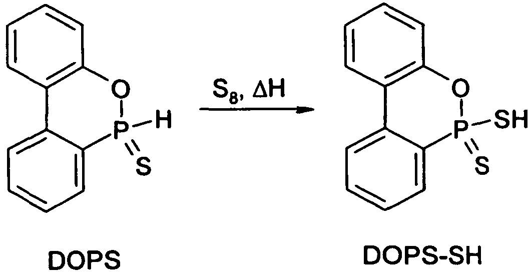

11,6 g (0,05 mol) DOPS und 1,6 g (0,05 mol) elementarer Schwefel wurden gründlich vermischt, das Gemisch wurde in einen Rundkolben übergeführt, und die Luft wurde mit einem Inertgas (Stickstoff) verdrängt. Anschließend wurden die festen Ausgangsstoffe in einem auf 130 °C voreingestellten Heizbad erhitzt. Nach 15 min wurde das Heizbad entfernt. Die entstandene hellgelbe Schmelze wurde ausgegossen und erstarrte beim Abkühlen zu einem amorphen Feststoff, der gemäß NMR-Analyse 93 % DOPS-SH im Gemisch mit DOPS-Ausgangsprodukt enthielt.
³¹P-NMR (CDCl₃): 78,7 ppm
MS: 264 (C₁₂H₉OPS₂)

### Beispiel 6

### Herstellung von Bis(9,10-dihydro-9-oxa-10-oxo-10-phosphaphenanthren-10-yl)sulfid (DOPO-S-DOPO) und 9,10-Dihydro-10-(9,10-dihydro-9-oxa-10-phospha-10-thioxophenanthren-10-ylthio)-9-oxa-10-phosphaphenanthren-10-on bzw. -10-oxid (DOPS-S-DOPO)

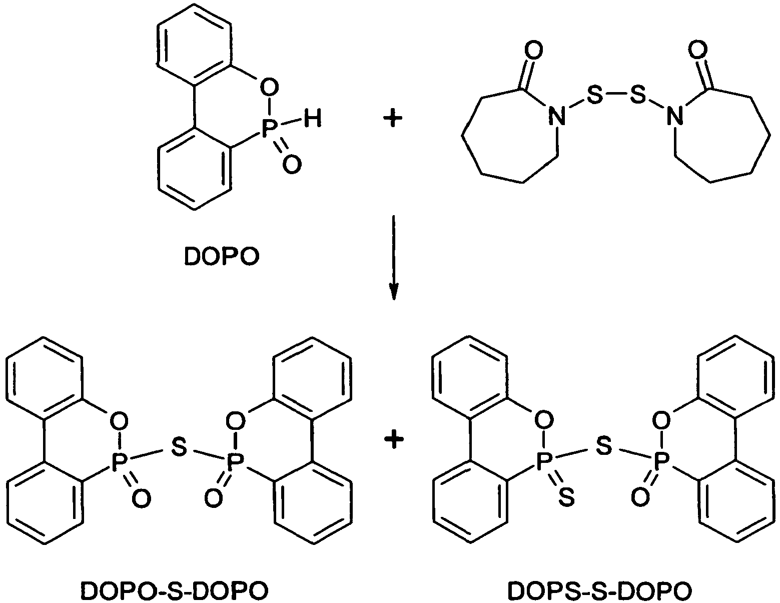

30 g (0,139 mol) DOPO, 20 g (0,69 mol) N,N'-Dicaprolactamdisulfid (Bis(hexahydro-2-oxo-2H-azepin-1-yl)disulfid) und 120 ml Toluol wurden in einem mit einem Rückflusskühler, einem mechanischen Rührwerk und einem Inertgaseinleitrohr ausgestatteten Rundkolben 3 h lang unter Rückfluss und Luftausschluss gerührt. Nach dem Abkühlen wurde die überstehende, dunkle Lösung durch Dekantieren entfernt. Der Rückstand wurde mit 200 ml Acetonitril aufgekocht, und die heiße Lösung wurde durch ein Faltenfilter filtriert. Beim Abkühlen schied sich ein körniger Feststoff ab, der abfiltriert und im Vakuum getrocknet wurde. Auf diese Weise wurden 19,8 g eines grauen Pulvers erhalten, das laut NMR-Analyse ein 37:63-Gemisch der Verbindungen DOPO-S-DOPO und DOPS-S-DOPO war.
³¹P-NMR (CDCl₃): DOPO-S-DOPO: 0,61 ppm
DOPS-S-DOPO: 0,14 ppm, 0,61 ppm, 63,4 ppm, 63,7 ppm
MS: DOPO-S-DOPO: 462 (C₂₄H₁₆O₄P₂S)
DOPS-S-DOPO: 478 (C₂₄H₁₆O₃P₂S₂)
Elementaranalyse (37 % DOPO-S-DOPO, 63 % DOPS-S-DOPO):
ber. P 13,13 %, gef. P 13,40 %

### Beispiel 7

### Herstellung von 9,10-Dihydro-10-mercapto-9-oxa-10-phosphaphenanthren-10-thion-bzw. -10-sulfid-triethylammoniumsalz (DOPS-SNH(Et)₃)

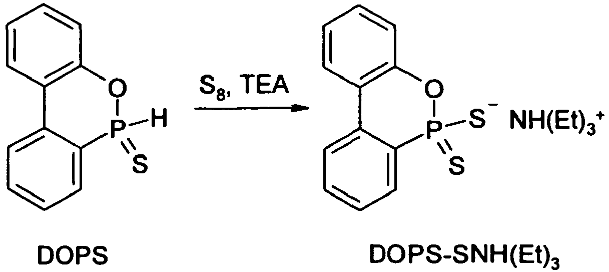

9,3 g (0,04 mol) DOPS und 1,31 g (0,041 mol) Schwefel wurden in 100 ml abs. Toluol 1,5 h lang bei 35 °C gerührt. Anschließend wurden 5,3 g (0,053 mol) Triethylamin unter Rühren zugetropft und die erhaltene Suspension 1 h lang bei etwa 50 °C gerührt. Nach dem Abkühlenlassen auf Raumtemperatur wird der ausgefallene Feststoff abfiltriert, mit Diethylether gewaschen und unter leichtem Erwärmen im Vakuum getrocknet. Auf diese Weise wurden 13,4 g (92 % d.Th.) DOPS-SNH(Et)₃ als weißer kristalliner Feststoff erhalten.
Fp.: 137-139 °C
³¹P-NMR (CDCl₃): 99,8 ppm
Elementaranalyse: ber. P 8,47 %, gef. P 8,32 %

### Beispiel 8

### Herstellung von 9,10-Dihydro-10-mercapto-9-oxa-10-phosphaphenanthren-10-thion-bzw. -10-sulfid-triethylammoniumsalz (DOPS-SNH(Et)₃)

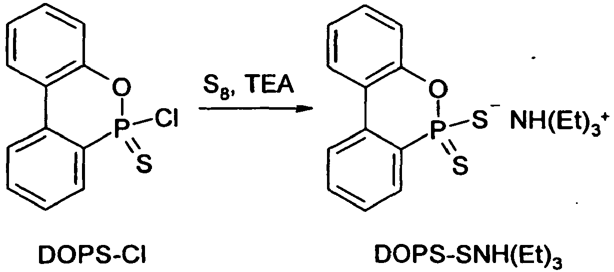

26,6 g DOPS-Cl (0,1 mol) wurden in 75 ml trockenem Toluol bei 80 °C gelöst, woraufhin 34 g (0,33 mol) Triethylamin und danach 7 g (0,22 mol) elementarer Schwefel zugesetzt wurden. Das Reaktionsgemisch wurde unter Inertgasatmosphäre 6 h lang bei 90 °C gerührt, wonach die Temperatur auf 100 °C erhöht und weitere 5 h lang gerührt wurde. Im Reaktionsverlauf färbte sich der Kolbeninhalt dunkel, und es bildete sich ein zäher Bodensatz, der beim anschließenden Abkühlen zu einem Feststoff erstarrte. Dieser wurde mittels einer Glasfritte abgesaugt, dreimal mit Toluol gewaschen und getrocknet. Anschließend wurde der Feststoff bei Raumtemperatur 5 min lang in 200 ml Ethanol gerührt, um Triethylamin-hydrochlorid zu entfernen, abgesaugt, mit 100 ml Toluol aufgeschlämmt und bei 60 °C 30 min lang gerührt, um die dunklen Verunreinigungen zu entfernen. Danach wurde das Produkt abgesaugt, mit Diethylether gewaschen und im Vakuum getrocknet. Erhalten wurden 29,6 g DOPS-SNH(Et)₃ als leicht bräunliches Pulver (80 % d.Th.), das mit dem Produkt aus Beispiel 7 chemisch identisch war.

### Beispiel 9

### Herstellung von 9,10-Dihydro-10-hydroxy-9-oxa-10-phosphaphenanthren-10-thion-bzw. -10-sulfid-triethylammoniumsalz (DOPS-ONH(Et)₃)

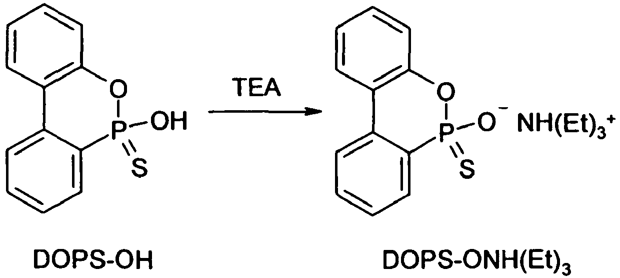

Zu einer Suspension von 12,41 g (0,05 mol) DOPS-OH in 75 ml abs. Toluol wurden bei 60 °C innerhalb von 15 min 6 g (0,06 mol) Triethylamin unter Rühren zugetropft. Das Reaktionsgemisch wurde weitere 30 min lang gerührt und danach abgekühl. Der dabei ausfallende Feststoff wurde über eine Glasfritte abfiltriert, mit Ether gewaschen und unter leichtem Ewärmen im Vakuum getrocknet. Auf diese Weise wurden 13,4 g (99% d.Th.) DOPS-OH(Et)₃ als weißer kristalliner Feststoff erhalten.
Fp.: 147-148,5 °C
³¹P-NMR (CDCl₃): 61,3 ppm
Elementaranalyse: ber. P 8,86 %, gef. P 8,78 %

### Beispiel 10

### Herstellung von 9,10-Dihydro-10-hydroxy-9-oxa-10-phosphaphenanthren-10-thion-bzw. -10-sulfid-melaminiumsalz (DOPS-OMel)

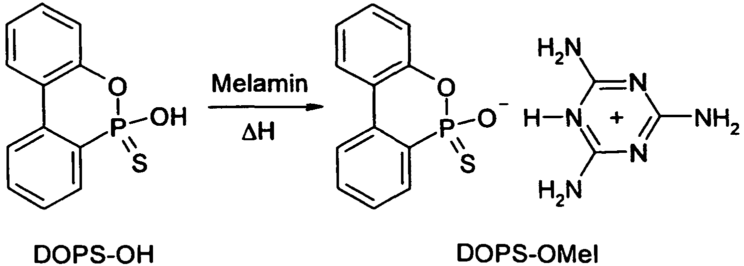

Unter Inertgasspülung wurden in einem mit einem mechanischen Rührer und einem Rückflusskühler ausgestatteten Rundkolben 126,1 g (1,0 mol) fein gemahlenes Melamin in 1300 ml Wasser bei Raumtemperatur vorgelegt. Dieser Suspension wurden unter starkem Rühren 248,2 g (1,0 mol) DOPS-OH zugesetzt. Das Reaktionsgemisch wurde auf 90 °C erhitzt und weitere 4 h lang bei gleicher Temperatur gerührt. Der beim Abkühlen auf Raumtemperatur entstandene rührbare Brei wurde filtriert, und der Filterkuchen wurde bis zu einer Restfeuchte < 0,1 % (Karl Fischer) bei 70 °C an der Luft getrocknet und anschließend vermahlen, wobei 365,7 g (98 % d.Th.) DOPS-OMeI als feinkristalliner, weißer Feststoff erhalten wurden.
Fp.: 275 °C (Zers.) (H₂O)
³¹P-NMR (MeOH-d₄): 60,7 ppm
Elementaranalyse: ber. P 8,27 %, N 22,44 %, gef. P 8,19 %, N 22,42

### Beispiel 11

### Herstellung von 9,10-Dihydro-10-hydroxy-9-oxa-10-phosphaphenanthren-10-thion-bzw. -10-sulfid-guanidiniumsalz (DOPS-OGua)

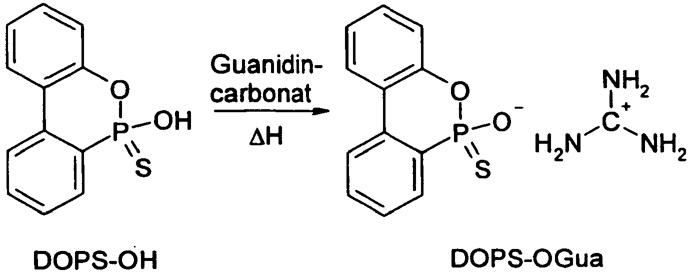

Unter Inertgasspülung wurden in einem mit einem mechanischen Rührer und einem Rückflusskühler ausgestatteten Rundkolben 90,1 g (0,5 mol) Guanidincarbonat in 300 g Wasser bei 60 °C gelöst. Unter starkem Rühren wurden zu dieser Lösung portionsweise und unter Vermeidung zu starker Gasentwicklung 248,2 g (1,0 mol) DOPS-OH zugesetzt. Die erhaltene Suspension wurde zunächst bei Normaldruck auf 140 °C und nach Ende der Dampfentwicklung im Wasserstrahlvakuum auf 185 °C erhitzt, um das Wasser zu entfernen. Nach dem Ausgießen, Kühlen und Vermahlen der gebildeten wasserfreien Schmelze wurden 304,5 g (99 % d.Th.) DOPS-OGua als bernsteinfarbenes Pulver erhalten.
Fp.: 173-179 °C (H₂O)
³¹P-NMR (Aceton-d₆): 57,9 ppm
Elementaranalyse: ber. P 10,07 %, N 13,67 %, gef. P 10,27 %, N 13,69

### Beispiel 12

### Herstellung von Bis(9,10-dihydro-9-oxa-10-phospha-10-thioxophenanthren-10-yl)-sulfid (DOPS-S-DOPS)

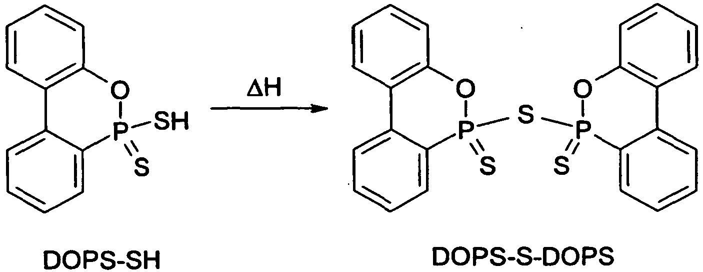

13,21 g (0,05 mol) DOPS-SH wurden in 120 ml Acetonitril 2 h lang unter Rückfluss und Inertgasatmosphäre gerührt, wobei ein körniger Feststoff gebildet wurde, der abfiltriert und anschließend 1 h lang in Xylol unter Rückfluss gerührt wurde. Danach wurde der Feststoff abfiltriert, mit warmem Chloroform und danach mit Diethylether gewaschen und anschließend im Vakuum getrocknet. So wurden 7,7 g (78 % d.Th.) DOPS-S-DOPS als weißer kristalliner Feststoff erhalten.
Fp.: 237-239 °C (Xylol)
³¹P-NMR (CDCl₃): 74,1 ppm; 74,8 ppm
MS: 494 (C₂₄H₁₆O₂P₂S₃)
Elementaranalyse: ber. P 12,53 %, gef. P 12,41 %

### Beispiel 13

### Herstellung von Bis(9,10-dihydro-9-oxa-10-phospha-10-thioxophenanthren-10-yl)di-sulfid (DOPS-S₂-DOPS)

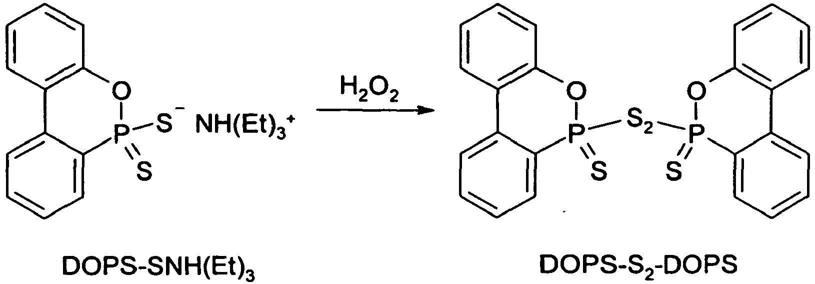

Zu einer Suspension von 5,48 g (0,015 mol) DOPS-ONH(Et)₃ in 50 ml abs. Toluol wurden bei etwa 20 °C mithilfe einer Spritze 0,66 g (0,018 mol) 37%ige Salzsäure zugesetzt, wonach 5,6 g (0,016 mol) einer 10%igen Lösung von Wasserstoffperoxid in Ethylacetat innerhalb von 10 min unter kräftigem Rühren zugetropft wurden. Nach weiteren 30 min wurden 0,75 ml Triethylamin zugesetzt, um überschüssige Salzsäure zu neutralisieren, wonach die flüchtigen Bestandteile im Vakuum abdestilliert wurden. Der Rückstand wurde mit einem Gemisch aus 75 ml Wasser und 25 ml Ethanol etwa 15 min lang unter leichtem Erwärmen gerührt, um Triethylamin-hydrochlorid aufzulösen. Anschließend wurde der Feststoff abgesaugt und ein weiteres Mal in Wasser/Ethanol gerührt. Das nach erneutem Absaugen und Trocknung unter leichtem Erwärmen im Vakuum erhaltene weiße Pulver wurde aus Acetonitril umkristallisiert wurde, wobei 3,20 g (81 % d.Th.) DOPS-S₂-DOPS erhalten wurden.
Fp.: 126-130 °C (Zers.) (Acetonitril)
³¹P-NMR (CDCl₃): 84,28 ppm; 84,65 ppm
MS: 526 (C₂₄H₁₆O₂P₂S₄)
Elementaranalyse: ber. P 11,76 %, gef. P 11,62 %

### Beispiel 14

### Herstellung von Bis(9,10-dihydro-9-oxa-10-phospha-10-thioxophenanthren-10-yl)-tetrasulfid (DOPS-S₄-DOPS)

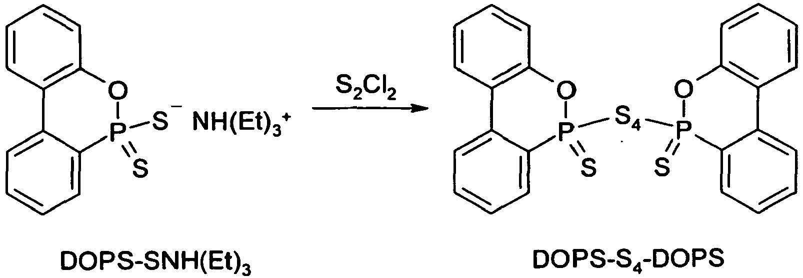

Zu einer Suspension von 2,75 g (0,0075 mol) DOPS-ONH(Et)₃ in 50 ml abs. Toluol wurden bei etwa 20 °C mithilfe einer Spritze 0,51 g (0,00375 mol) Dischwefeldichlorid innerhalb von 5 min zugesetzt. Nach Beendigung der Zugabe wurde das Reaktionsgemisch 2 h lang bei Raumtemperatur gerührt, wonach die flüchtigen Bestandteile im Vakuum abdestilliert wurden. Der Rückstand wurde mit einem Gemisch aus 50 ml Wasser und 10 ml Ethanol etwa 30 min lang bei 35 °C gerührt, um Triethylamin-hydrochlorid aufzulösen. Anschließend wurde der Feststoff abgesaugt und ein weiteres Mal in einem Gemisch aus 30 ml Wasser und 20 ml Ethanol gerührt. Nach dem Abfiltrieren wurde der Feststoff aus Acetonitril umkristallisiert und anschließend unter leichtem Erwärmen im Vakuum getrocknet, wobei 1,9 g (86 % d.Th.) DOPS-S₄-DOPS als weißer Feststoff erhalten wurden.
Fp.: ab ca. 150 °C (Zers.) (Acetonitril)
³¹P-NMR (CDCl₃): 84,0 ppm; 84,5 ppm
MS: 590 (C₂₄H₁₆O₂P₂S₆)
Elementaranalyse: ber. P 10,49 %, gef. P 10,56 %

### Beispiel 15

### Herstellung von Di(9,10-dihydro-9-oxa-10-phospha-10-thioxophenanthren-10-yl)ether (DOPS-O-DOPS)

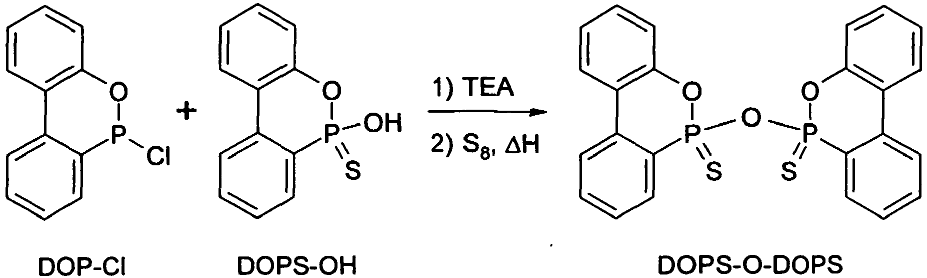

### 1) Dimerisierung

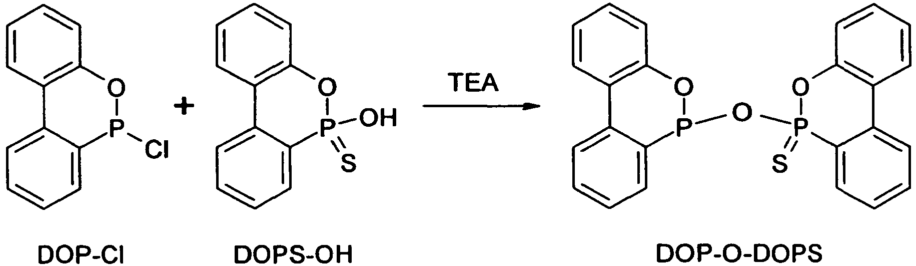

Unter Inertgasspülung wurden 23,5 g (0,10 mol) DOP-Cl in einen mit Thermometer, mechanischem Rührwerk und Rückflusskühler ausgestatteten Rundkolben eingebracht, wonach 130 ml luft- und feuchtigkeitsfreies Toluol zugesetzt wurden und das Gemisch auf 60 °C erhitzt wurde. Nachdem sich das DOP-Cl vollständig gelöst hatte, wurden 12,3 g (0,12 mol) Triethylamin zugegeben. Anschließend wurden 24,8 g (0,1 mol) DOPS-OH innerhalb von 15 min zugegeben. Nach weiteren 6 h bei 60 °C wurden Heizung und Rührer abgestellt, und der Reaktionsansatz wurde 12 h lang bei Raumtemperatur stehen gelassen.

### 2) Sulfidierung

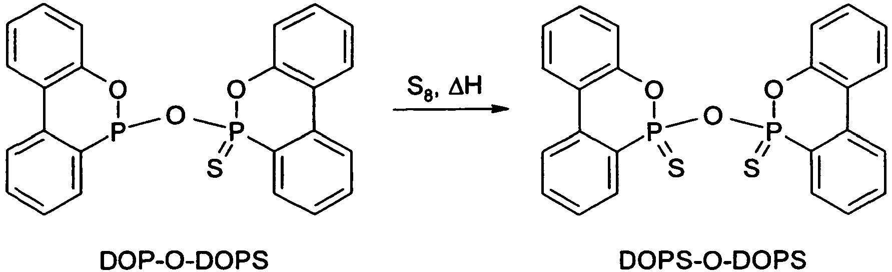

Nun wurden 3,2 g (0,1 mol) Schwefel zugegeben, und die Suspension wurde auf 80 °C erhitzt. Nach 1,5 h wurde die Temperatur auf 100 °C erhöht, und 4 h später wurden Heizung und Rührer abgeschaltet. Nach dem Abkühlen wurde der ausgefallene Feststoff abfiltriert, in Wasser aufgeschlämmt, um das Triethylammoniumchlorid zu entfernen, und erneut abfiltriert. Dieser Waschvorgang wurde wiederholt. Anschließend wurde der noch bräunliche Feststoff mit Chloroform gewaschen und dann im Vakuum getrocknet. Erhalten wurde DOPS-O-DOPS als weißer Feststoff (43 g, d.h. 90 % d.Th.).
Fp.: 210-215 °C
³¹P-NMR (CDCl₃): 62,3 ppm; 62,8 ppm
MS: 478 (C₂₄H₁₆O₃P₂S₂)
Elementaranalyse: ber. P 12,95 %, gef. P 12,61 %

### Beispiel 16

### Herstellung von 9,10-Dihydro-10-(9,10-dihydro-9-oxa-10-phospha-10-thioxophenanthren-10-yloxy)-9-oxa-10-phosphaphenanthren-10-on bzw. -10-oxid (DOPS-O-DOPO)

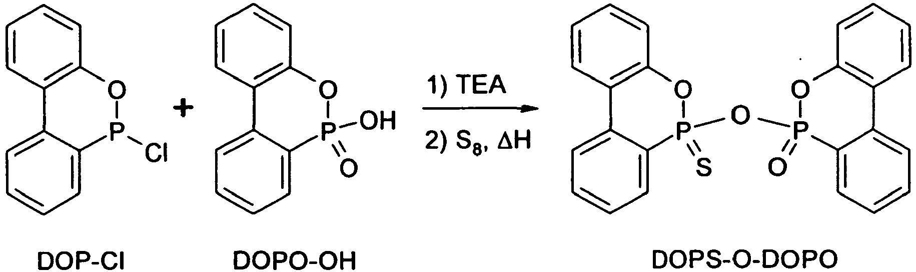

### 1) Dimerisierung

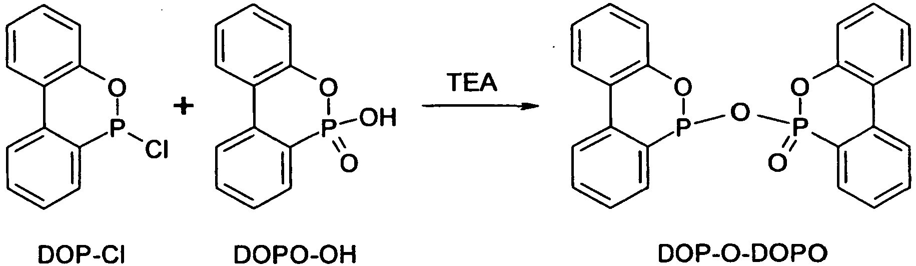

Unter Inertgasspülung wurden 22,7 g (0,097 mol) DOP-Cl in einen mit Thermometer, mechanischem Rührwerk und Rückflusskühler ausgestatteten Rundkolben eingebracht, wonach 100 ml Luft- und feuchtigkeitsfreies Toluol zugesetzt wurden und das Gemisch auf 60 °C erhitzt wurde. Nachdem sich das DOP-Cl vollständig gelöst hatte, wurden 10,0 g (0,10 mol) Trimethylamin zugegeben. Anschließend wurden 22,5 g (0,097 mol) DOPS-OH innerhalb von 10 min zugegeben, und das Reaktionsgemisch wurde 3 h lang bei 60 °C gerührt.

### 2) Sulfidierung

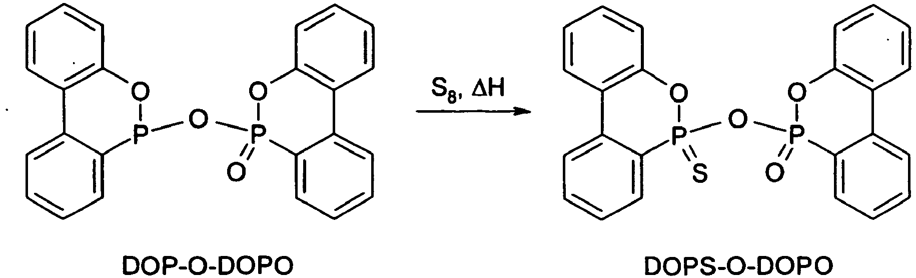

Nun wurden 3,2 g (0,10 mol) elementarer Schwefel zugegeben, und das Reaktionsgemisch wurde 6 h lang bei 95 °C gerührt, wonach Heizung und Rührer abgeschaltet wurden. Nach dem Abkühlen wurde der ausgefallene Feststoff abfiltriert, in Wasser aufgeschlämmt um das Triethylammoniumchlorid zu entfernen, und erneut abfiltriert. Dieser Waschvorgang wurde wiederholt. Anschließend wurde der Feststoff im Vakuum getrocknet. Erhalten wurde DOPS-O-DOPO als weißer Feststoff (39 g, d.h. 87 % d.Th.).
Fp.: 211-216 °C
³¹P-NMR (CDCl₃): -0,61 ppm; -0,29 ppm; -0,03 ppm, 0,30 ppm;
63,26 ppm; 63,45 ppm; 63,58 ppm; 63,79 ppm
MS: 462 (C₂₄H₁₆O₄P₂S)
Elementaranalyse: ber. P 13,40 %, gef. P 13,45 %

### Beispiel 17

### Herstellung von Bis(9,10-dihydro-9-oxa-10-phospha-10-thioxophenanthren-10-yl)sulfid (DOPS-S-DOPS)

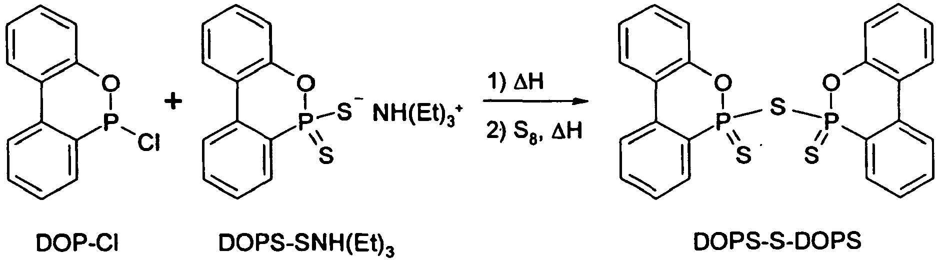

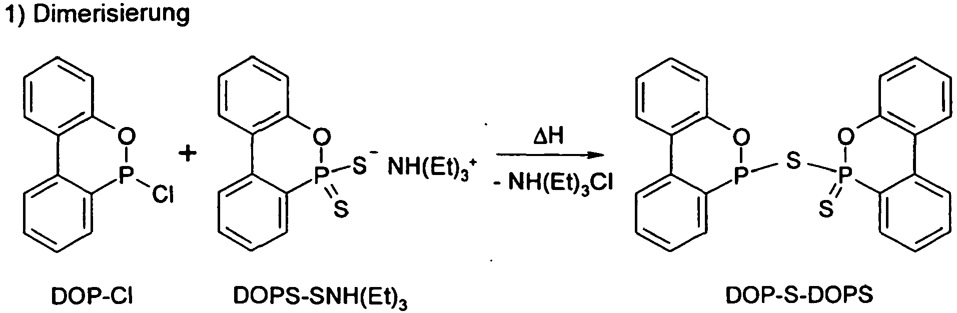

Unter Inertgasspülung wurden 4,7 g (0,02 mol) DOP-Cl in einen mit Thermometer, mechanischem Rührwerk und Rückflusskühler ausgestatteten Rundkolben eingebracht, wonach 60 ml luft- und feuchtigkeitsfreies Toluol zugesetzt wurden und das Gemisch auf 60 °C erhitzt wurde. Nachdem sich das DOP-CI vollständig gelöst hatte, wurden unter Rühren 7,3 g (0,02 mol) DOPS-SNH(Et)₃ zugegeben, und das Reaktionsgemisch wurde 4 h lang bei 60 °C gerührt. Die erhaltene Suspension wurde wurde ohne vorherige Abkühlung unter Feuchtigkeitsausschluss filtriert, um das Triethylammoniumchlorid abzutrennen. Der Filterkuchen wurde mit warmem abs. Toluol nachgewaschen, wonach die Filtrate vereinigt und im Vakuum auf ca. 50 ml eingeengt wurden.

### 2) Sulfidierung

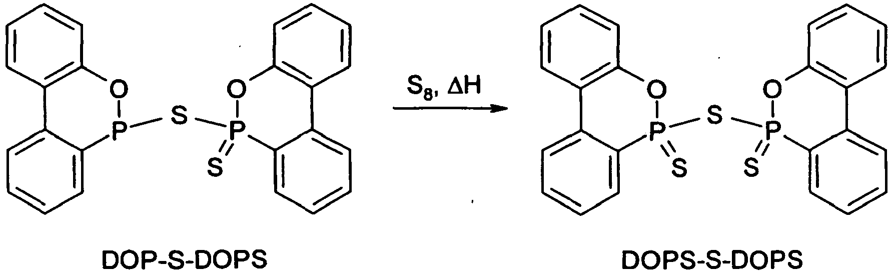

Zur eingeengten Lösung von DOP-S-DOPS wurden 0,64 g (0,02 mol) elementarer Schwefel zugegeben, wonach das Reaktionsgemisch bei 100 °C 4 h lang unter Inertgasatmosphäre gerührt wurde. Nach dem Abkühlen wurde der ausgefallene Feststoff abfiltriert, mit warmem abs. Toluol gewaschen und im Vakuum getrocknet. Erhalten wurde DOPS-S-DOPS als hellgraues Pulver (5,1 g, d.h. 52 % d.Th.). Das so erhaltene Produkt war chemisch identisch mit jenem von Beispiel 12.

### Beispiel 18

### Herstellung von 9,10-Dihydro-10-mercapto-9-oxa-10-phosphaphenanthren-10-thion bzw. -10-sulfid (DOPS-SH)

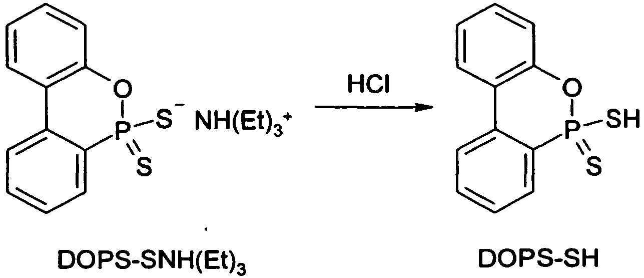

9,13 g (0,025 mol) DOPS-SNH(Et)₃ wurden bei 60 °C unter Inertgasatmosphäre in 100 ml Ethanol gelöst. Nach dem Abkühlen wurden 50 ml konz. Salzsäure, 200 ml Wasser und ca. 20 g NaCl zugesetzt, wonach 150 ml Toluol hinzugefügt wurden. Dieses Gemisch wurde 10 min gerührt und dann in einen Scheidetrichter übergeführt. Die Toluolphase wurde abgetrennt und die wässrige Phase dreimal mit je 30 ml Toluol extrahiert. Die organischen Phasen wurden vereinigt, mit 50 ml Wasser gewaschen und über Na₂SO₄ getrocknet. Nach Abfiltrieren des Trocknungsmittels und Abdestillieren des Toluols im Vakuum wurde DOPS-SH in 85%iger Ausbeute als kristalliner Feststoff erhalten.
³¹P-NMR (CDCl₃): 78,7 ppm
MS: 264 (C₁₂H₉OPS₂)
Elementaranalyse: ber. P 11,72 %, gef. P 11,29 %

### Beispiel 19

### In-situ-Herstellung von 9,10-Dihydro-10-hydroxy-9-oxa-10-phosphaphenanthren-10-thion bzw. -10-sulfid (DOPS-OH) bei der Flammschutzausrüstung von Kunststoffen

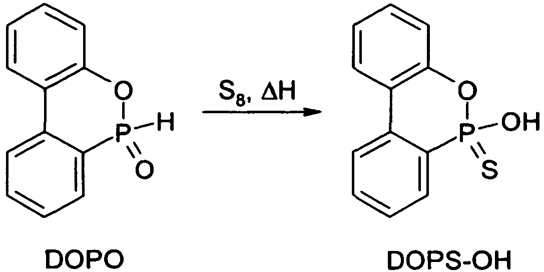

Der Reaktionsmechanismus war analog zu Beispiel 2. Polystyrol-Granulat (M_{w}: ca. 192.000 g/mol, T_{g}: ca. 94 °C) wurde zusammen mit 5 Gew.% DOPO und 2 Gew.-% Schwefel bei 175-180 °C mit einer Verweilzeit von 3 min in einem Doppelschneckenextruder der Marke Prism Eurolab 16 von Thermo Scientific unter Verwendung einer Düse mit einem Austrittsspalt von 16 x 4 mm zu einem einheitlichen Strang verarbeitet. Anhand von ³¹P-NMR-Analysen wurde gezeigt, dass DOPO praktisch quantitativ zu DOPS-OH umgesetzt war.

### Beispiel 20

### Flammschutzausrüstung von Kunststoffen

### Beispiel 20A: Epoxynovolak

Ein Epoxynovolak, D.E.N. 438 von Dow Chemicals mit einem EEW (Epoxyäquivalentgewicht) von 179 g/mol, wurde mit 0,1 Gew.-% Triethanolamin und der jeweiligen neuen Verbindung der Erfindung als Flammschutzadditiv - in der zur Einstellung des erforderlichen Phosphorgehalts im Prüfkörper jeweils notwendigen Menge - vermischt. Das Gemisch wurde anschließend 2 h lang bei 140 °C gehalten, mittels Vakuum entgast und auf 90 °C abgekühlt. Die so hergestellte Präformulierung wurde bei 90 °C mit 6 Gewichtsteilen Dicyandiamid und 2 Gewichtsteilen Fenuron, bezogen auf 100 Gewichtsteile Epoxynovolak, vermischt. Die Aushärtung erfolgte in einem Aluminiumschälchen durch vorsichtiges Erhitzen auf 120°C innerhalb von 30 min, Halten dieser Temperatur für 1 h, Erhöhung der Temperatur auf 130 °C für 1 h und anschließendes Halten einer Temperatur von 200 °C für 2 h. Daraus wurden Probenkörper mit 70 x 13 x 4 mm geformt und zur Charakterisierung der Brandeigenschaften gemäß UL94 klassifiziert.

Bei UL94 handelt es sich um die Prüfvorschrift der Underwriters Laboratories, die inhaltsgleich in die IEC/DIN EN 60695-11-10 und -20 übernommen wurde. Dabei wirken Zündflammen mit einer Leistung von 50 W zweimal kurzzeitig auf den Probenkörper ein, wobei bei der Vertikalprüfung die Brennzeit und das Abfallen brennender Teile mithilfe eines unterhalb des Probenkörpers angeordneten Wattebauschs bewertet werden. Die Klassifizierung erfolgt in den Stufen "V0", "V1" und "V2", die in nachstehender Tabelle 1 erläutert werden:

**Tabelle 1: UL94-Klassifizierung**

| Klassifizierung | **V0** | **V1** | **V2** |
|---|---|---|---|
| Nachbrennzeit nach jeder Beflammung | ≤ 10 s | ≤ 30 s | ≤ 30 s |
| Gesamtbrenndauer je Satz (10 Beflammungen) | ≤ 50 s | ≤ 250 s | ≤ 250 s |
| Nachbrennzeit/Nachglühen nach der 2. Beflammung | ≤ 30 s | ≤ 60 s | ≤ 60 s |
| Abbrand bis zur Haltekammer | nein | nein | nein |
| Entzündung der Watte | nein | nein | ja |

Die Klassifizierung "V0" stellt demnach die höchste Anforderung beim Brandschutz dar und ist daher beim Einsatz von Flammschutzzusammensetzungen anzustreben.

In der nachstehenden Tabelle 2 sind die Ergebnisse der Prüfung für zwei erfindungsgemäße neue Verbindungen, nämlich DOPS und DOPS-OH, sowie für DOPO als Vergleichssubstanz angegeben.

**Tabelle 2**

| **Flammschutzadditiv** | **Phosphorgehalt (Gew.-%)** | **UL94-Klassifizierung** |
|---|---|---|
| - | 0,0 | nicht klassifiziert |
| | | |
| Vergl.: DOPO | 1,0 | nicht klassifiziert |
| Vergl.: DOPO | 1,2 | V1 |
| Vergl.: DOPO | 1,4 | V1 |
| Vergl.: DOPO | 1,6 | V0 |
| | | |
| Erf.: DOPS-OH | 1,0 | nicht klassifiziert |
| Erf.: DOPS-OH | 1,2 | V1 |
| Erf.: DOPS-OH | 1,4 | V0 |
| | | |
| Erf.: DOPS | 1,0 | V1 |
| Erf.: DOPS | 1,2 | V1 |
| Erf.: DOPS | 1,4 | V0 |

Aus diesen Ergebnissen geht die signifikant verbesserte Flammschutzwirkung von DOPS-OH und insbesondere von DOPS gegenüber dem handelsüblichen Additiv DOPO deutlich hervor. So ist in beiden Fällen im Vergleich mit DOPO eine signifikant geringere Menge an Additiv vonnöten, um eine bestimmte UL-94-Klassifikation zu erreichen.

### Beispiel 20B: Polystyrol

Aus Polystyrol-Granulat (M_{w}: ca. 192.000 g/mol, T_{g}: ca. 94 °C) wurden wie folgt Probenkörper geformt. Das Granulat wurde zu einem Pulver vermahlen und in einem Mörser mit den jeweiligen Additiven vermischt. Je 12 g dieser Feststoff-Mischungen wurden in Aluminiumtiegel eingewogen, die anschließend in einen vorgeheizten Trockenschrank gestellt und so lange bei der jeweils erforderlichen Temperatur darin belassen wurden, bis das Pulver zu kompakten Platten verschmolzen war. Die dafür erforderliche Temperatur ist von der Zusammensetzung der jeweiligen Mischung abhängig und lag bei den untersuchten Probekörpern zwischen 165 und 195 °C, und der Schmelzvorgang war nach 10 bis 20 min beendet, wie dies in der nachfolgenden Tabelle angegeben ist. Nach dem Abkühlen wurden die Platten aus den Aluminiumtiegeln entnommen und zu Prüfkörpern für die Flammschutztests zersägt.

Einerseits wurden zur Untersuchung der Nachbrenndauer (in s) bei Beflammung gemäß UL94 Probenkörper mit 70 x 13 x 4 mm hergestellt. Andererseits wurden Probenkörper mit 120 x 10 x 4 mm hergestellt und gemäß ISO 4589 untersucht, um ihren Sauerstoff-Index (LOI, "Limiting Oxygen Index") zu bestimmen. Dabei handelt es sich um die minimale Sauerstoffkonzentration (im Gemisch mit Stickstoff), bei der die Verbrennung eines Probenkörpers gerade noch aufrechtgehalten wird. Hierzu wird ein vertikal angeordneter Probenkörper in einem Gaszylinder, der mit dem jeweiligen Sauerstoff/Stickstoff-Gemisch durchströmt wird, mittels einer Propangasflamme gezündet und sein Brennverhalten beobachtet. Kürzere Brenndauer- und höhere LOI-Werte stehen folglich für bessere Brandschutzwirkung.

Die für drei Testreihen von Probenkörpern erhaltenen Ergebnisse sind in den nachstehenden Tabellen 3, 5 und 6 angeführt und stellen Mittelwerte von je vier Messungen dar.

**Tabelle 3**

| Testreihe 1: Brandschutztests gemäß UL94 und ISO 4589 | | | | | |
|---|---|---|---|---|---|
| **Versuch Nr.** | **Polystyrol (Gew.-%)** | **Additiv(e), Gew.-%** | **Verarbeitungsbedingungen** | **Brenndauer (s)** | **LOI (% O₂)** |
| 1 | 100 | - | 180 °C | keine Selbstverlöschung | 18,6 |
| | | | 15 min | | |
| 2 | 95 | Vergl.: **DOPO,** 5 | 180 °C | keine Selbstverlöschung | 20,5 |
| | | | 12 min | | |
| 3 | 90 | Vergl.: **DOPO,** 10 | 180 °C | 24 | 20,8 |
| | | | 12 min | | |
| 4 | 95 | Erf.: **DOPS-OH,** 5 | 175 °C | 24 | 22,6 |
| | | | 15 min | | |
| 5 | 94 | Erf.: **DOPS-OH,** 5 | 175 °C | 2,2 | 25 |
| | | **Schwefel,** 1 | 15 min | | |
| 6 | 93,5 | Erf.: **DOPS-OH,** 5 | 170-175 °C | 2,0 | 25,5 |
| | | **Schwefel,** 1,5 | 15 min | | |
| 7 | 92 | Ert.: **DOPS-OH,** 5 | 175 °C | 1,6 | 25,2 |
| | | **Schwefel,** 3 | 15 min | | |
| 8 | 93 | Erf.: **DOPS-OH,** 7 | 170-173 °C | 12 | 23,0 |
| | | | 12 min | | |
| 9 | 90 | Erf.: **DOPS-OH,** 10 | 170-173 °C | 4,0 | 23,4 |
| | | | 12 min | | |
| 10 | 95 | Erf.: **DOPS,** 5 | 170-175 °C | keine Selbstverlöschung | 21,0 |
| | | | 12 min | | |
| 11 | 94 | Erf.: **DOPS,** 5 | 170-175 °C | 1,2 | 24,3 |
| | | **Schwefel,** 1 | 12 min | | |
| 12 | 95 | Erf.: **DOPS-SH,** 5 | 170-174 °C | 4,9 | 23,2 |
| | | | 12 min | | |
| 13 | 90 | Erf.: **DOPS-OH,** 5 | 160-163 °C | 6,3 | 23,5 |
| | | **DCDS, 5** | 10 min | | |
| 14 | 88 | Erf.: **DOPS-OH,** 7 | 160-163 °C | 1,6 | 24,3 |
| | | **DCDS,** 5 | 10 min | | |

| | | | | | |
|---|---|---|---|---|---|
| DCDS: N,N'-Dicaprolactamdisulfid | | | | | |

Zu Vergleichszwecken werden LOI-Werte für elementaren Schwefel als alleiniges Flammschutzadditiv in Polystyrol (Molekulargewicht: 120.000 bis 250.000 g/mol) angeführt. Diese Werte wurden der WO 99/10429 entnommen:

**Tabelle 4: Brandschutztests gemäß ISO 4589 mit elementarem Schwefel**

| **Versuch Nr.** | **Schwefel (Gew.-%)** | **LOI (% O₂)** |
|---|---|---|
| A-1 | 10,0 | 22,3 |
| A-2 | 3,0 | 22,2 |
| A-3 | 1,0 | 21,9 |
| A-4 | 0,44 | 20,7 |
| A-5 | 0,18 | 19,0 |

Die obigen Ergebnisse belegen klar, dass die neuen Verbindungen der vorliegenden Erfindung mitunter erheblich bessere Flammschutzwirkung zeigen als das bekannte Additiv DOPO, insbesondere bei kombinierter Verwendung mit elementarem Schwefel oder schwefelhältigen Verbindungen, mit denen sie synergistische Wirkung zeigen, was aus Tabelle 3, aus einem Vergleich der Tabellen 3 und 4, aber auch daraus hervorgeht, dass bei Verdoppelung der Schwefelmenge bei Versuch Nr. 7 im Vergleich zu Versuch Nr. 6 keine Verbesserung der Brandschutzwirkung erzielt wurde. Zudem ist die Einarbeitung der erfindungsgemäßen Verbindungen in eine Harzmasse in den meisten Fällen gegenüber DOPO erleichtert.

Umseitig sind die Ergebnisse der Brandschutztests gemäß UL94 für eine zweite Testreihe von neuen Verbindungen gemäß vorliegender Erfindung angeführt.

**Tabelle 5**

| Testreihe 2: Brandschutztests gemäß UL94 | | | | |
|---|---|---|---|---|
| **Versuch Nr.** | **Polystyrol (Gew.-%)** | **Additiv(e), Gew.-%** | **Verarbeitungsbedingungen** | **Brenndauer (s)** |
| 15 | 100 | - | 180 °C | keine Selbstverlöschung |
| | | | 15 min | |
| 16 | 97 | Vergl.: **Schwefel,** 3 | 180 °C | keine Selbstverlöschung |
| | | | 12 min | |
| 17 | 95 | Vergl.: **Schwefel,** 5 | 180 °C | 40 |
| | | | 12 min | |
| 18 | 95 | Vergl.: **DOPO,** 5 | 180 °C | keine Selbstverlöschung |
| | | | 12 min | |
| 19 | 90 | Vergl.: **DOPO,** 10 | 180 °C | 24 |
| | | | 12 min | |
| 20 | 95 | Vergl.: **BBDS,** 5 | 180 °C | 7,2 |
| | | | 15 min | |
| 21 | 92,5 | Vergl.: **DOPO,** 5 | 180 °C | 4,0 |
| | | **BBDS,** 2,5 | 14 min | |
| 22 | 92,5 | Erf.: **DOPS-SNH(Et)₃,** 7,5 | 175 °C | 33 |
| | | | 14 min | |
| 23 | 91 | Erf.: **DOPS-SNH(Et)₃,** 7,5 | 175 °C | 4,6 |
| | | **Schwefel, 1,5** | 15 min | |
| 24 | 93 | Erf.: **DOPS-ONH(Et)₃,** 7 | 175 °C | 33 |
| | | | 13 min | |
| 25 | 91,5 | Erf.: **DOPS-ONH(Et)₃,** 7 | 180 °C | 11 |
| | | **Schwefel,** 1,5 | 14 min | |
| 26 | 95,5 | Erf.: **DOPS-OMel,** 2,5 | 190 °C | 7,6 |
| | | **Schwefel,** 2 | 15 min | |
| 27 | 92 | Erf.: **DOPS-OMel,** 3 | 190 °C | 17,5 |
| | | **BBDS,** 5 | 15 min | |
| 28 | 94,5 | Erf.: **DOPS-OGua,** 3,5 | 190 °C | 5,7 |
| | | **Schwefel,** 2 | 15 min | |
| 29 | 92 | Erf.: **DOPS-OGua,** 3 | 190 °C | 17,5 |
| | | **BBDS,** 5 | 15 min | |
| 30 | 94 | Erf.: **DOPS-S-DOPS,** 3,5 | 175-180 °C | 1,9 |
| | | **Schwefel,** 2,5 | 14 min | |
| 31 | 91,5 | Erf.: **DOPS-S-DOPS,** 3,5 | 170 °C | 29 |
| | | **DCDS,** 5 | 12 min | |
| 32 | 92,5 | Erf.: **DOPS-S-DOPS,** 2,5 | 195 °C | 2,0 |
| | | **BBDS,** 5 | 14 min | |
| 33 | 94,3 | Erf.: **DOPS-S₂-DOPS,** 5,7 | 173-176 °C | 6,1 |
| | | | 14 min | |
| 34 | 94 | Erf.: **DOPS-S₂-DOPS,** 3,5 | 175 °C | 17 |
| | | **Schwefel,** 2,5 | 14 min | |
| 35 | 94 | Erf.: **DOPS-S₄-DOPS,** 6 | 175 °C | 22 |
| | | | 14 min | |
| 36 | 94,5 | Erf.: **DOPS-S₄-DOPS,** 4 | 175 °C | 19 |
| | | **Schwefel,** 1,5 | 14 min | |

| | | | | |
|---|---|---|---|---|
| DCDS: N,N'-Dicaprolactamdisulfid BBDS: Bis(benzothiazolyl)disulfid | | | | |

Die Ergebnisse in Tabelle 5 belegen klar, dass die neuen Verbindungen der vorliegenden Erfindung mitunter erheblich bessere Flammschutzwirkung zeigen als das bekannte Additiv DOPO, insbesondere bei kombinierter Verwendung mit elementarem Schwefel oder schwefelhältigen Verbindungen, mit denen sie synergistische Wirkung zeigen. Zudem ist die Einarbeitung der erfindungsgemäßen Verbindungen in eine Harzmasse in den meisten Fällen gegenüber DOPO erleichtert.

Darüber hinaus zeigt die obige Tabelle aber auch klar, dass der Synergismus der erfindungsgemäßen Verbindungen substanzspezifisch ist, d.h. nicht jede schwefelhältige, als flammschutzfördernd bekannte Verbindung wirkt in gleichem Ausmaß synergistisch, wenn überhaupt. Beispielsweise liefert das Melaminium- bzw. Guanidiniumsalz von DOPS (Versuche 26 bis 29) mit Schwefel wesentlich bessere Ergebnisse als mit BBDS, obwohl BBDS bei alleinigem Einsatz bessere Flammschutzwirkung aufweist als die gleiche Gewichtsmenge an Schwefel. Diese Spezifität des Synergismus wird auch durch die Versuche 30 bis 32 belegt, in denen das Dimer DOPS-S-DOPS mit Schwefel und BBDS als Synergisten ausgezeichnete Ergebnisse liefert, während mit DCDS eine, allgemein betrachtet, durchschnittliche, im Vergleich mit den übrigen Zusammensetzungen der Erfindung jedoch eher schlechte Leistung erzielt wird.

Der Versuch, die mitunter ausgezeichneten Ergebnisse des Dimers DOPS-S-DOPS durch die Gegenwart der doppelten molaren Menge an Phosphor und sogar der dreifachen Menge an Schwefel bei gleichen Gewichtsanteilen zu erklären, wird durch die Versuche 33 bis 36 mit DOPS-S₂-DOPS und DOPS-S₄-DOPS widerlegt. Obwohl in derselben Gewichtsmenge dieser Verbindungen zunehmend mehr Schwefel vorhanden ist, verschlechtern sich die Brenndauer-Werte sogar.

Umseitig sind die Ergebnisse der Brandschutztests gemäß UL94 für eine dritte Testreihe von neuen Verbindungen gemäß vorliegender Erfindung unter Verwendung eines weiteren Synergisten angeführt.

**Tabelle 6**

| Testreihe 3: Brandschutztests gemäß UL94 | | | | |
|---|---|---|---|---|
| **Versuch Nr.** | **Polystyrol (Gew.-%)** | **Additiv(e), Gew.-%** | **Verarbeitungsbedingungen** | **Brenndauer (s)** |
| 37 | 100 | - | 190 °C | keine Selbstverlöschung |
| | | | 15 min | |
| 38 | 96 | Vergl.: **Vultac TB7, 4** | 190 °C | 18 |
| | | | 15 min | |
| 39 | 93 | Vergl.: **Vultac TB7,** 7 | 190 °C | 11 |
| | | | 15 min | |
| 40 | 93 | Erf.: **DOPS-ONH₄,** 7 | 190 °C | 23 |
| | | | 15 min | |
| 41 | 93 | Erf.: **DOPS-ONH₄, 3** | 190 °C | 5,2 |
| | | **Vultac TB7,** 4 | 15 min | |
| 42 | 93,5 | Erf.: **DOPS-O-DOPO,** 2,5 | 190 °C | 6,7 |
| | | **Vultac TB7,** 4 | 15 min | |
| 43 | 93,5 | Erf.: **DOPS-O-DOPS,** 2,5 | 190 °C | 3,2 |
| | | **Vultac TB7,** 4 | 15 min | |

| | | | | |
|---|---|---|---|---|
| Vultac TB7: p-tert-Butylphenoldisulfid-Polymer (Polysulfid); ein Vulkanisationsmittel von Arkema Inc. (Philadelphia, PA, USA) | | | | |

Die Ergebnisse in Tabelle 6 belegen erneut die Wirksamkeit der erfindungsgemäßen neuen Verbindungen als Flammschutzmittel, insbesondere zusammen mit einem schwefelhätigen Synergisten. Bemerkenswert ist hier vor allem, dass Vultac TB7, ein von Arkema Inc. als Vulkanisationsmittel vertriebenes Polysulfid, alleine zwar ebenfalls ganz gute Brandschutzwirkung zeigt, zusammen mit Verbindungen der vorliegenden Erfindung jedoch noch deutlich wirksamere Kombinationen bildet, die somit großes Potenzial als Flammschutzzusammensetzungen aufweisen.

Zusammenfassend belegen die obigen Versuche klar die Eignung der erfindungsgemäßen neuen DOPS-Derivate als Flammschutzmittel, alleine oder in Kombination mit einem weiteren, synergistisch wirkenden Additiv, wobei dieser Synergismus hierin als substanzspezifisch identifiziert wurde. Den jeweils geeignetsten Synergisten für die jeweilige erfindungsgemäße Verbindung herauszufinden, wird somit das Ziel weiterer Untersuchungen sein. Dazu sollte der durchschnittliche Fachmann problemlos und ohne übermäßiges Experimentieren in der Lage sein, indem beispielsweise in Reihenversuchen ein Panel bekannter Flammschutzmittel in Kombination mit jedem einzelnen DOPS-Derivat gemäß UL94 und/oder ISO 4589 getestet wird.

## Patentansprüche

1. 9,10-Dihydro-9-oxa-10-phosphaphenanthren-Derivat der Formel I 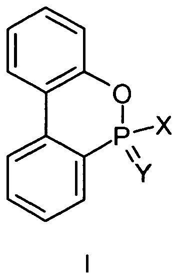 worin X Wasserstoff ist und Y Schwefel ist, d.h. 9,10-Dihydro-9-oxa-10-phosphaphenanthren-10-thion bzw. -10-sulfid ("DOPS"): 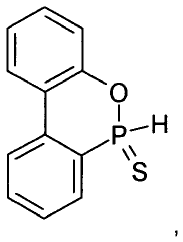 oder ein ringgeöffnetes Hydrolysat davon.

2. 9,10-Dihydro-9-oxa-10-phosphaphenanthren-Derivat der Formel I, worin X OH ist und Y Schwefel ist, d.h. 9,10-Dihydro-10-hydroxy-9-oxa-10-phosphaphenanthren-10-thion bzw. -10-sulfid ("DOPS-OH"): 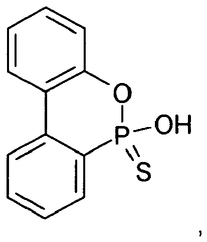 oder ein ringgeöffnetes Hydrolysat davon.

3. 9,10-Dihydro-9-oxa-10-phosphaphenanthren-Derivat der Formel I, worin X ONH₄ ist und Y Schwefel ist, d.h. 9,10-Dihydro-10-hydroxy-9-oxa-10-phosphaphen-anthren-10-thion- bzw. -10-sulfid-ammoniumsalz ("DOPS-ONH₄"): 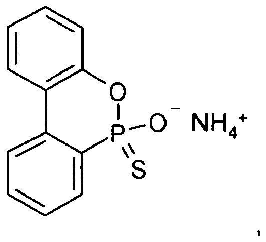 oder ein ringgeöffnetes Hydrolysat davon.

4. 9,10-Dihydro-9-oxa-10-phosphaphenanthren-Derivat der Formel I, worin X SH ist und Y Schwefel ist, d.h. 9,10-Dihydro-10-mercapto-9-oxa-10-phosphaphenanthren-10-thion bzw. -10-sulfid ("DOPS-SH"): 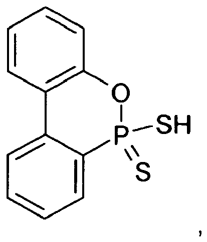 oder ein ringgeöffnetes Hydrolysat davon.

5. 9,10-Dihydro-9-oxa-10-phosphaphenanthren-Derivat der Formel I, worin X SNH(Et)₃ ist und Y Schwefel ist, d.h. 9,10-Dihydro-10-mercapto-9-oxa-10-phosphaphenanthren-10-thion- bzw. -10-sulfid-triethylammoniumsalz ("DOPS-SNH(Et)₃"): 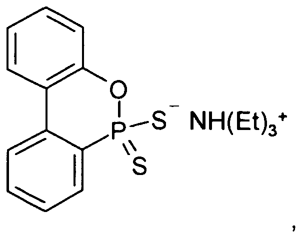 oder ein ringgeöffnetes Hydrolysat davon.

6. 9,10-Dihydro-9-oxa-10-phosphaphenanthren-Derivat der Formel I, worin X ONH(Et)₃ ist und Y Schwefel ist, d.h. 9,10-Dihydro-10-hydroxy-9-oxa-10-phosphaphenanthren-10-thion- bzw. -10-sulfid-triethylammoniumsalz ("DOPS-ONH(Et)₃"): 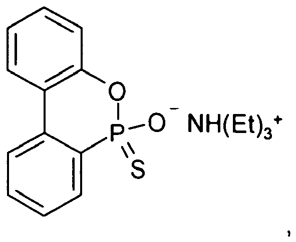 oder ein ringgeöffnetes Hydrolysat davon.

7. 9,10-Dihydro-9-oxa-10-phosphaphenanthren-Derivat der Formel I, worin X OMel ist und Y Schwefel ist, d. h. 9,10-Dihydro-10-hydroxy-9-oxa-10-phosphaphenanthren-10-thion- bzw. -10-sulfid-melaminiumsalz ("DOPS-OMel"): 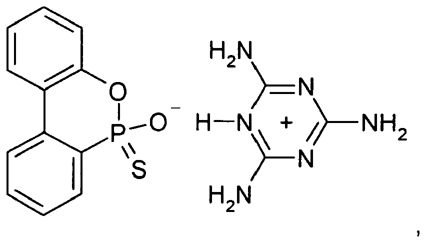 oder ein ringgeöffnetes Hydrolysat davon.

8. 9,10-Dihydro-9-oxa-10-phosphaphenanthren-Derivat der Formel I, worin X OGua ist und Y Schwefel ist, d.h. 9,10-Dihydro-10-hydroxy-9-oxa-10-phosphaphenanthren-10-thion- bzw. -10-sulfid-guanidiniumsalz ("DOPS-OGua"): 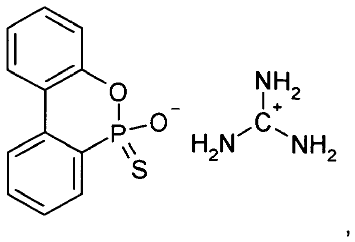 oder ein ringgeöffnetes Hydrolysat davon.

9. 9,10-Dihydro-9-oxa-10-phosphaphenanthren-Derivat der Formel I 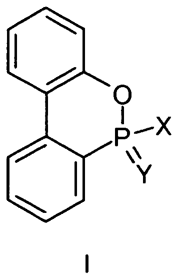 worin X eine zweiwertige Linker-Gruppe Zₙ ist, die zwei Dihydrooxaphosphaphenanthrenyl-Reste der Formel I zu einem Dimer der Formel II verbindet 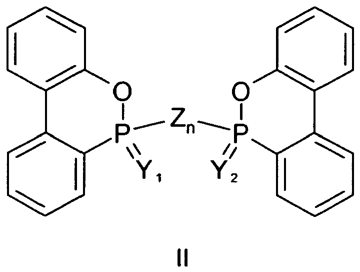 worin Y₁ und Y₂ jeweils Sauerstoff sind, Z Schwefel ist und n = 1 ist, d.h. Bis(9,10-dihydro-9-oxa-10-oxo-10-phosphaphenanthren-10-yl)sulfid ("DOPO-S-DOPO"): 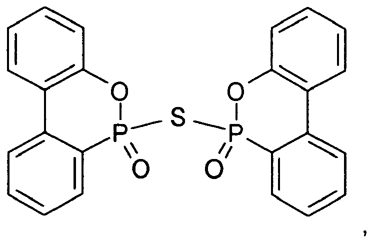 oder ein ringgeöffnetes Hydrolysat davon.

10. 9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁ und Z jeweils Schwefel sind, Y₂ Sauerstoff ist und n = 1 ist, d.h. 9,10-Dihydro-10-(9,10-dihydro-9-oxa-10-phospha-10-thioxophenanthren-10-ylthio)-9-oxa-10-phosphaphenanthren-10-on bzw. -10-oxid ("DOPS-S-DOPO"): 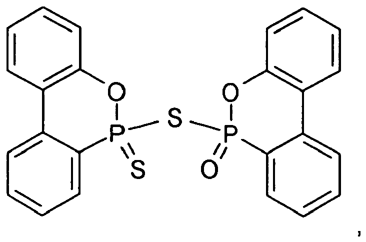 oder ein ringgeöffnetes Hydrolysat davon.

11. 9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁, Y₂ und Z jeweils Schwefel sind und n = 1 ist, d.h. Bis(9,10-dihydro-9-oxa-10-phospha-10-thioxophenanthren-10-yl)sulfid ("DOPS-S-DOPS"): 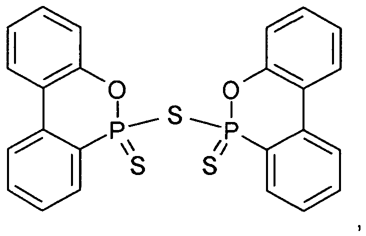 oder ein ringgeöffnetes Hydrolysat davon.

12. 9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁, Y₂ und Z jeweils Schwefel sind und n = 2 ist, d.h. Bis(9,10-dihydro-9-oxa-10-phospha-10-thioxophenanthren-10-yl)disulfid ("DOPS-S₂-DOPS"): 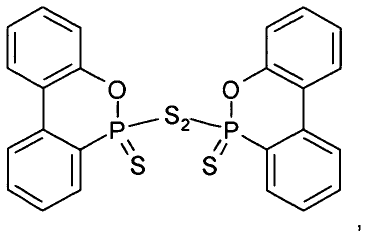 oder ein ringgeöffnetes Hydrolysat davon.

13. 9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁, Y₂ und Z jeweils Schwefel sind und n = 4 ist, d.h. Bis(9,10-dihydro-9-oxa-10-phospha-10-thioxophenanthren-10-yl)tetrasulfid ("DOPS-S₄-DOPS"): 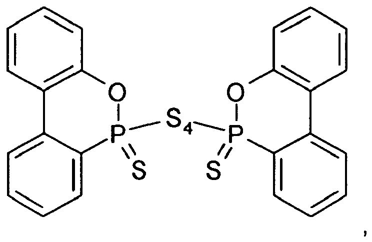 oder ein ringgeöffnetes Hydrolysat davon.

14. 9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁ und Y₂ jeweils Schwefel sind, Z Sauerstoff ist und n = 1 ist, d.h. Di(9,10-dihydro-9-oxa-10-phospha-10-thioxophenanthren-10-yl)ether ("DOPS-O-DOPS"): 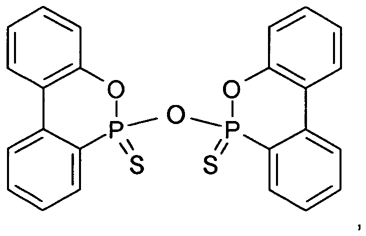 oder ein ringgeöffnetes Hydrolysat davon.

15. 9,10-Dihydro-9-oxa-10-phosphaphenanthren-Derivat der Formel I, worin X eine zweiwertige Linker-Gruppe Zₙ ist, die zwei Dihydrooxaphosphaphenanthrenyl-Reste der Formel I zu einem Dimer der Formel II verbindet, worin Y₁ Schwefel ist, Y₂ und Z jeweils Sauerstoff sind und n = 1 ist, d.h. 9,10-Dihydro-10-(9,10-dihydro-9-oxa-10-phospha-10-thioxophenanthren-10-yloxy)-9-oxa-10-phosphaphenanthren-10-on bzw. -10-oxid ("DOPS-O-DOPO"): 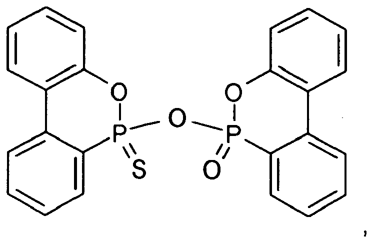 oder ein ringgeöffnetes Hydrolysat davon.

16. Verwendung der Verbindungen nach einem der Ansprüche 1 bis 15 als Flammschutzmittel, wobei zumindest eine der Verbindungen mit einem zu schützenden Substrat kombiniert wird.

17. Verwendung nach Anspruch 16, **dadurch gekennzeichnet, dass** die zumindest eine Verbindung in einem Anteil von 0,1 bis 25 Gew.-%, vorzugsweise 3 bis 10 Gew.-%, bezogen auf das Substrat, eingesetzt wird.

18. Verwendung nach Anspruch 17, **dadurch gekennzeichnet, dass** die zumindest eine Verbindung in Kombination mit elementarem Schwefel und/oder einer weiteren schwefelhältigen Verbindung eingesetzt wird.

19. Verwendung nach Anspruch 18, **dadurch gekennzeichnet, dass** die weitere schwefelhältige Verbindung zumindest eine S-S-Bindung aufweist, wobei zumindest eines der Schwefelatome in zweiwertiger Form vorliegt.

20. Verwendung nach einem der Ansprüche 16 bis 19, **dadurch gekennzeichnet, dass** die zumindest eine Verbindung als Bestandteil einer Flammschutzzusammensetzung mit dem Substrat kombiniert wird.

21. Verwendung nach einem der Ansprüche 16 bis 20, **dadurch gekennzeichnet, dass** die zumindest eine Verbindung als Flammschutzmittel für natürliche oder künstliche Polymere eingesetzt wird.

22. Flammschutzzusammensetzung, die zumindest eine Verbindung nach einem der Ansprüche 1 bis 15 als Flammschutzmittel umfasst.

23. Flammschutzzusammensetzung nach Anspruch 22, **dadurch gekennzeichnet, dass** zusätzlich elementarer Schwefel und/oder eine weitere schwefelhältige Verbindung enthalten ist/sind.

24. Flammschutzzusammensetzung nach Anspruch 23, **dadurch gekennzeichnet, dass** die weitere schwefelhältige Verbindung zumindest eine S-S-Bindung aufweist, wobei zumindest eines der Schwefelatome in zweiwertiger Form vorliegt.

25. Verfahren zur Herstellung einer Verbindung nach einem der Ansprüche 1 bis 15, **dadurch gekennzeichnet, dass** ein 9,10-Dihydro-9-oxa-10-phosphaphenanthren-Derivat, ausgewählt aus DOPO, DOP-Cl, DOPS, DOPS-Cl, DOP-NHPr, DOPS-SH, DOPS-OH und DOPS-SNH(Et)₃, mit elementarem Schwefel oder einer schwefelhältigen Verbindung umgesetzt oder hydrolysiert wird, wobei die jeweilige Reaktion aus der aus den folgenden Reaktionen a) bis t) bestehenden Gruppe ausgewählt ist:
a) der Umsetzung von DOP-Cl mit Schwefelwasserstoff zu DOPS: 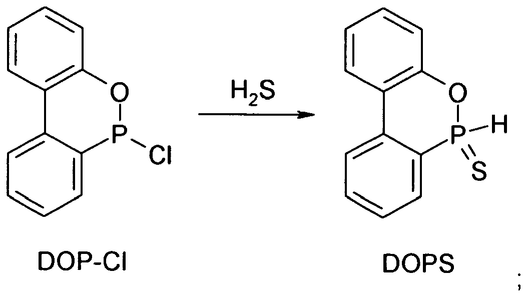
b) der Umsetzung von DOPO mit Lawesson-Reagenz zu DOPS: 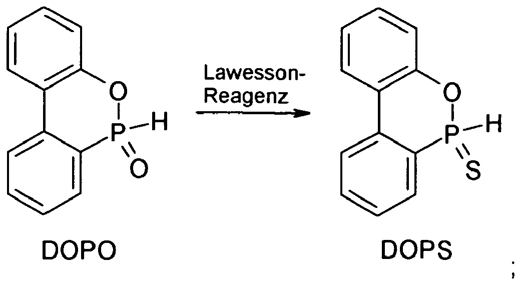
c) der Umsetzung von DOPO mit P₂S₅ zu DOPS: 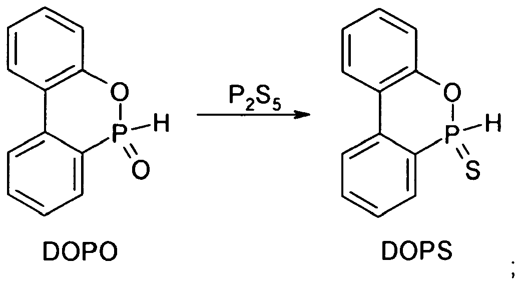
d) der Umsetzung von DOPS-OH mit Ammoniak zu DOPS-ONH₄: 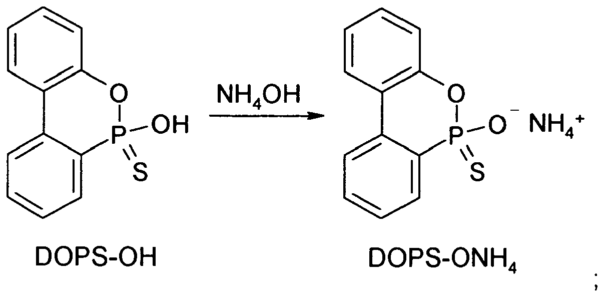
e) der Umsetzung von DOPO mit elementarem Schwefel zu DOPS-OH: 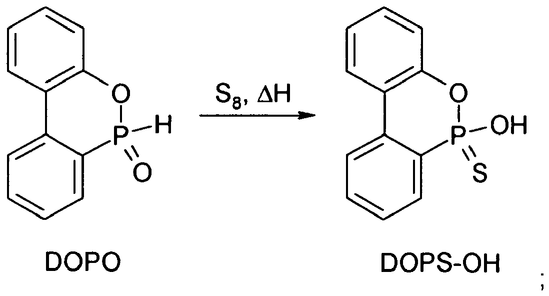
f) der Umsetzung von DOPO mit Ammoniumthiosulfat zu DOPS-ONH₄: 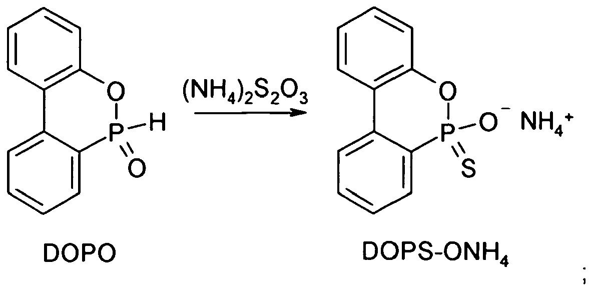
g) der Umsetzung von DOPS mit elementarem Schwefel zu DOPS-SH: 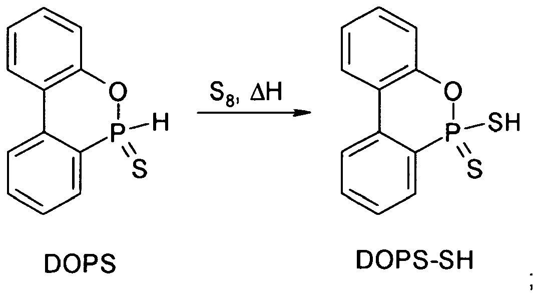
h) der Umsetzung von DOPO mit N,N'-Dicaprolactamdisulfid (Bis(hexahydro-2-oxo-2H-azepin-1-yl)disulfid) zu DOPO-S-DOPO und DOPS-S-DOPO: 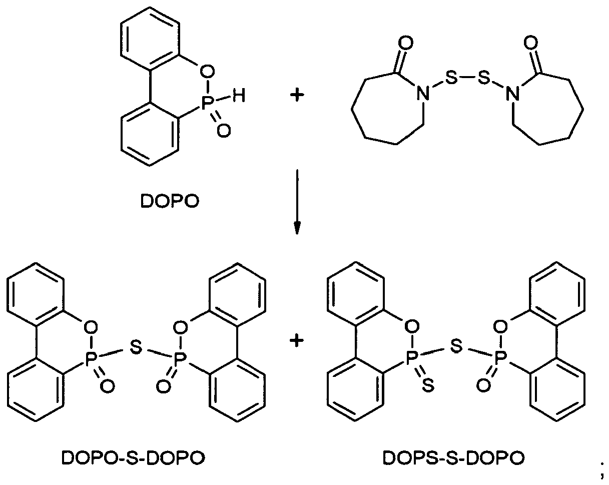
i) der Umsetzung von DOPS mit Schwefel und Triethylamin zu DOPS-SNH(Et)₃: 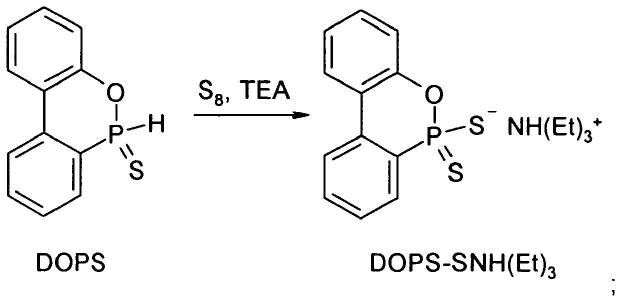
j) der Umsetzung von DOPS-Cl mit Schwefel und Triethylamin zu DOPS-SNH(Et)₃: 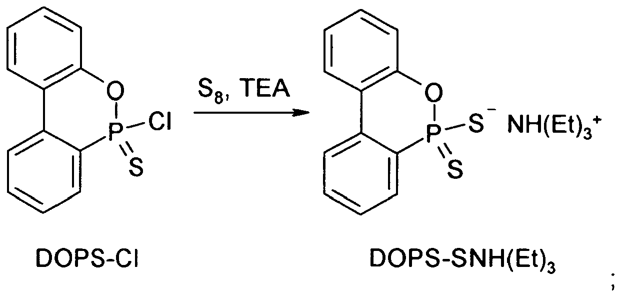
k) der Umsetzung von DOPS-OH mit Triethylamin zu DOPS-ONH(Et)₃: 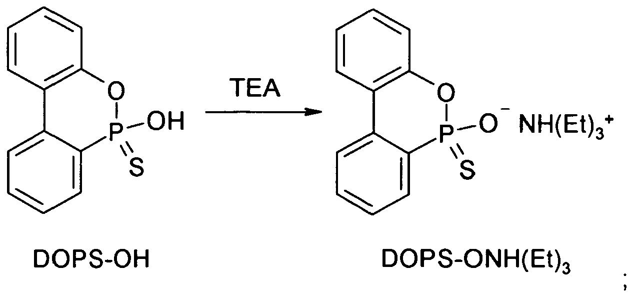
l) der Umsetzung von DOPS-OH mit Melamin zu DOPS-OMel: 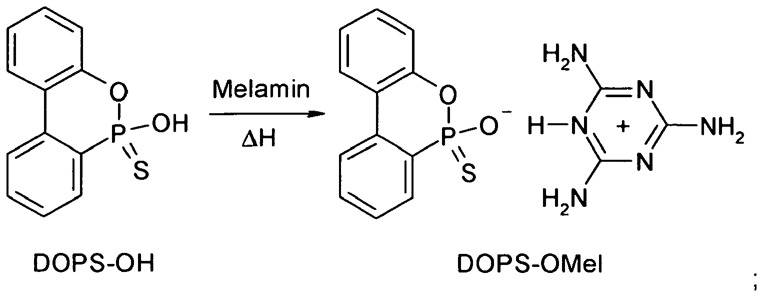
m) der Umsetzung von DOPS-OH mit Guanidincarbonat zu DOPS-OGua: 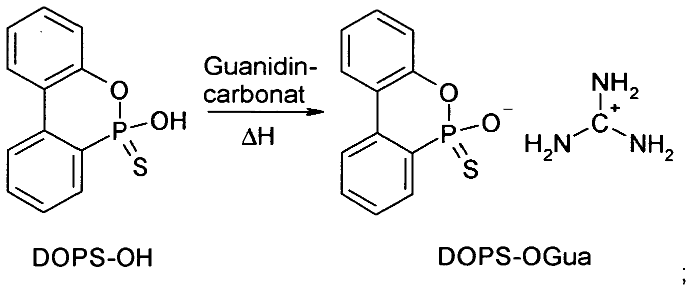
n) der Dimerisierung von DOPS-SH zu DOPS-S-DOPS: 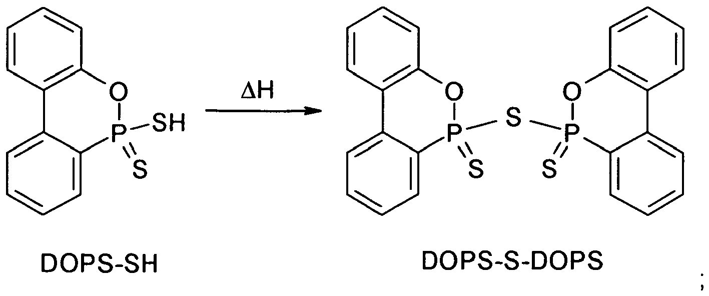
o) der Umsetzung von DOPS-SNH(Et)₃ mit Wasserstoffperoxid unter gleichzeitiger Dimerisierung zu DOPS-S₂-DOPS: 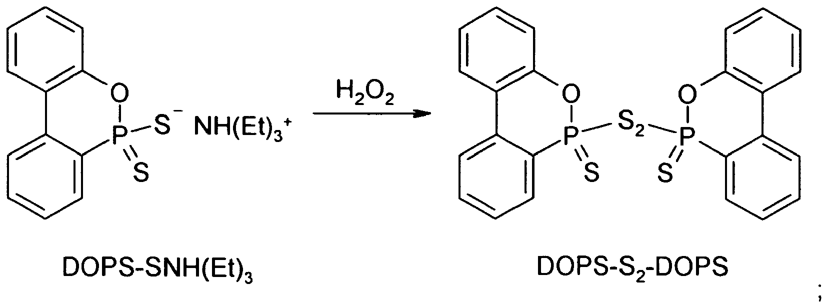
p) der Umsetzung von DOPS-SNH(Et)₃ mit Dischwefeldichlorid zu DOPS-S₄-DOPS: 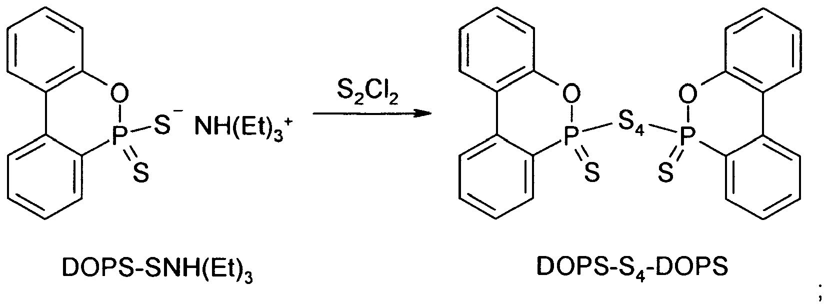
q) der Umsetzung von DOP-Cl mit DOPS-OH und Triethylamin sowie mit elementarem Schwefel zu DOPS-O-DOPS: 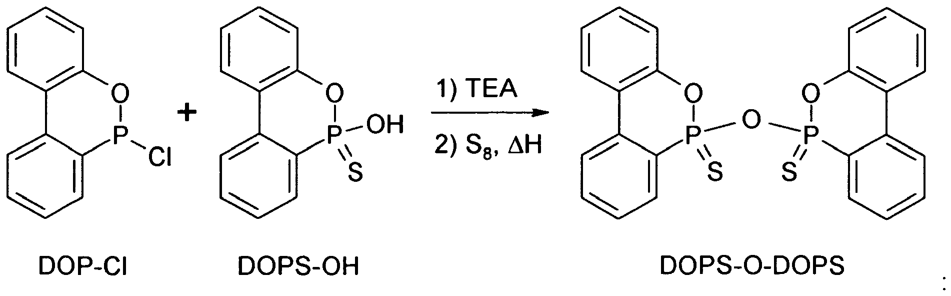
r) der Umsetzung von DOP-Cl mit DOPO-OH und Triethylamin sowie mit elementarem Schwefel zu DOPS-O-DOPO: 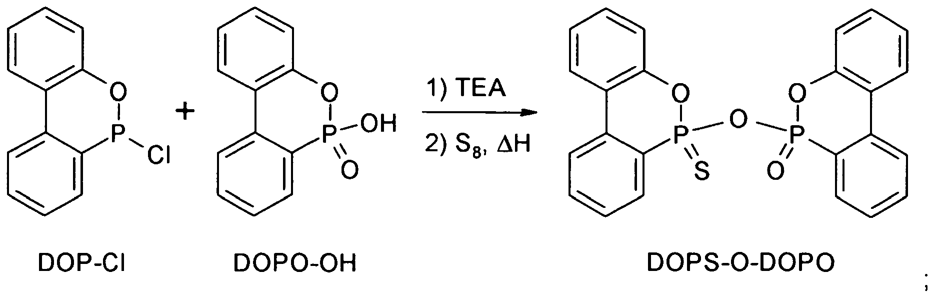
s) der Umsetzung von DOP-Cl mit DOPS-SNH(Et)₃ sowie mit elementarem Schwefel zu DOPS-S-DOPS: 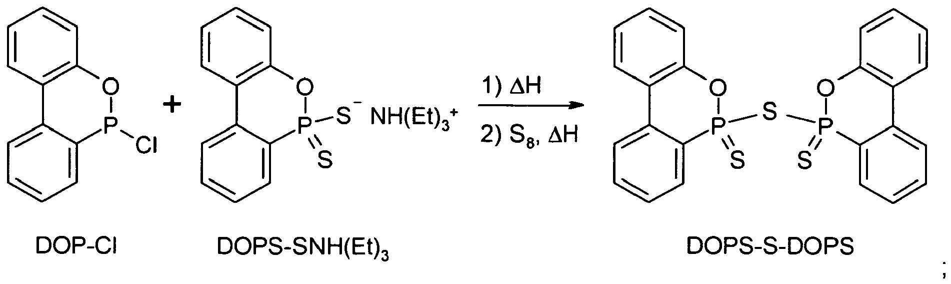 und
t) der Hydrolyse von DOPS-SNH(Et)₃ mit HCl zu DOPS-SH:

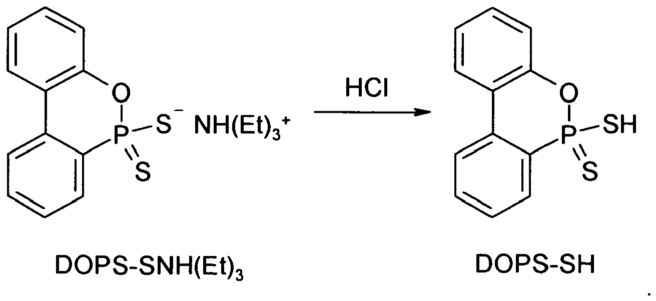

## Claims

1. A 9,10-dihydro-9-oxa-10-phosphaphenanthrene derivative of formula I: 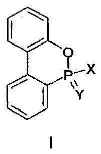 wherein X is hydrogen and Y is sulfur, i.e. 9,10-dihydro-9-oxa-10-phosphaphenanthrene-10-thione or -10-sulfide ("DOPS"): 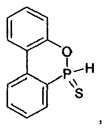 or a ring-opened hydrolyzate thereof.

2. A 9,10-dihydro-9-oxa-10-phosphaphenanthrene derivative of formula I, wherein X is OH and Y is sulfur, i.e. 9,10-dihydro-10-hydroxy-9-oxa-10-phosphaphenanthrene-10-thione or -10-sulfide ("DOPS-OH"): 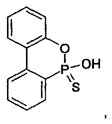 or a ring-opened hydrolyzate thereof.

3. A 9,10-dihydro-9-oxa-10-phosphaphenanthrene derivative of formula I, wherein X is ONH₄ and Y is sulfur, i.e. 9,10-dihydro-10-hydroxy-9-oxa-10-phosphaphenanthrene-10-thione or-10-sulfide ammonium salt ("DOPS-ONH₄"): 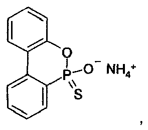 or a ring-opened hydrolyzate thereof.

4. A 9,10-dihydro-9-oxa-10-phosphaphenanthrene derivative of formula I, wherein X is SH and Y is sulfur, i.e. 9,10-dihydro-10-mercapto-9-oxa-10-phosphaphenanthrene-10-thione or-10-sulfide ("DOPS-SH"): 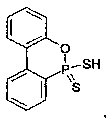 or a ring-opened hydrolyzate thereof.

5. A 9,10-dihydro-9-oxa-10-phosphaphenanthrene derivative of formula I, wherein X is SNH(Et)₃ and Y is sulfur, i.e. 9,10-dihydro-10-mercapto-9-oxa-10-phosphaphenanthrene-10-thione or -10-sulfide triethylammonium salt ("DOPS-SNH(Et)₃"): 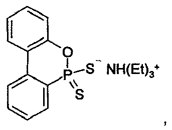 or a ring-opened hydrolyzate thereof.

6. A 9,10-dihydro-9-oxa-10-phosphaphenanthrene derivative of formula I, wherein X is ONH(Et)₃ and Y is sulfur, i.e. 9,10-dihydro-10-hydroxy-9-oxa-10-phosphaphenanthrene-10-thione or -10-sulfide triethylammonium salt ("DOPS-ONH(Et)₃"): 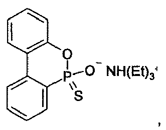 or a ring-opened hydrolyzate thereof.

7. A 9,10-dihydro-9-oxa-10-phosphaphenanthrene derivative of formula I, wherein X is OMel and Y is sulfur, i.e. 9,10-dihydro-10-hydroxy-9-oxa-10-phosphaphenanthrene-10-thione or-10-sulfide melaminium salt ("DOPS-OMel"): 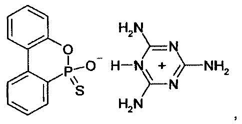 or a ring-opened hydrolyzate thereof.

8. A 9,10-dihydro-9-oxa-10-phosphaphenanthrene derivative of formula I, wherein X is OGua and Y is sulfur, i.e. 9,10-dihydro-10-hydroxy-9-oxa-10-phosphaphenanthrene-10-thione or-10-sulfide guanidinium salt ("DOPS-OGua"): 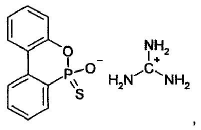 or a ring-opened hydrolyzate thereof.

9. A 9,10-dihydro-9-oxa-10-phosphaphenanthrene derivative of formula I, 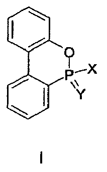 wherein X is a bivalent linker group Zₙ that links two dihydro-oxa-phosphaphenanthrenyl residues of formula I to form a dimer of formula II: 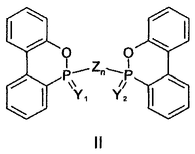 wherein Y₁ and Y₂ are each oxygen, Z is sulfur, and n is 1, i.e. bis(9,10-dihydro-9-oxa-10-oxo-10-phosphaphenanthren-10-yl) sulfide ("DOPO-S-DOPO"): 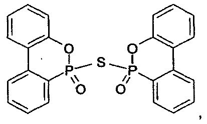 or a ring-opened hydrolyzate thereof.

10. A 9,10-dihydro-9-oxa-10-phosphaphenanthrene derivative of formula I, wherein X is a bivalent linker group Zₙ that links two dihydro-oxa-phosphaphenanthrenyl residues of formula I to form a dimer of formula II, wherein Y₁ and Z are each sulfur, Y₂ is oxygen, and n is 1, i.e. 9,10-dihydro-10-(9,10-dihydro-9-oxa-10-phospha-10-thioxophenanthren-10-yl-thio)-9-oxa-10-phosphaphenanthren-10-one or -10-oxide ("DOPS-S-DOPO"): 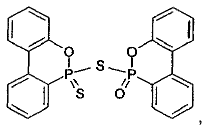 or a ring-opened hydrolyzate thereof.

11. A 9,10-dihydro-9-oxa-10-phosphaphenanthrene derivative of formula I, wherein X is a bivalent linker group Zₙ that links two dihydro-oxa-phosphaphenanthrenyl residues of formula I to form a dimer of formula II, wherein Y₁, Y₂ and Z are each sulfur and n is 1, i.e. bis(9,10-dihydro-9-oxa-10-phospha-10-thioxophenanthren-10-yl) sulfide ("DOPS-S-DOPS"): 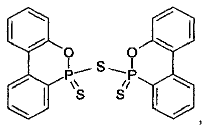 or a ring-opened hydrolyzate thereof.

12. A 9,10-dihydro-9-oxa-10-phosphaphenanthrene derivative of formula I, wherein X is a bivalent linker group Zₙ that links two dihydro-oxa-phosphaphenanthrenyl residues of formula I to form a dimer of formula II, wherein Y₁, Y₂ and Z are each sulfur and n is 2, i.e. bis(9,10-dihydro-9-oxa-10-phospha-10-thioxophenanthren-10-yl) disulfide ("DOPS-S₂-DOPS"): 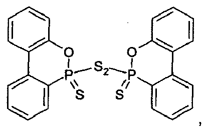 or a ring-opened hydrolyzate thereof.

13. A 9,10-dihydro-9-oxa-10-phosphaphenanthrene derivative of formula I, wherein X is a bivalent linker group Zₙ that links two dihydro-oxa-phosphaphenanthrenyl residues of formula I to form a dimer of formula II, wherein Y₁, Y₂ and Z are each sulfur and n is 4, i.e. bis(9,10-dihydro-9-oxa-10-phospha-10-thioxophenanthren-10-yl) tetrasulfide ("DOPS-S₄-DOPS"): 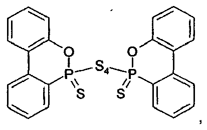 or a ring-opened hydrolyzate thereof.

14. A 9,10-dihydro-9-oxa-10-phosphaphenanthrene derivative of formula I, wherein X is a bivalent linker group Zₙ that links two dihydro-oxa-phosphaphenanthrenyl residues of formula I to form a dimer of formula II, wherein Y₁ and Y₂ are each sulfur, Z is oxygen, and n is 1, i.e. di(9,10-dihydro-9-oxa-10-phospha-10-thioxophenanthren-10-yl) ether ("DOPS-O-DOPS"): 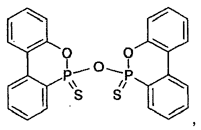 or a ring-opened hydrolyzate thereof.

15. A 9,10-dihydro-9-oxa-10-phosphaphenanthrene derivative of formula I, wherein X is a bivalent linker group Zₙ that links two dihydro-oxa-phosphaphenanthrenyl residues of formula I to form a dimer of formula II, wherein Y₁ is sulfur, Y₂ and Z are each oxygen, and n is 1, i.e. 9,10-dihydro-10-(9,10-dihydro-9-oxa-10-phospha-10-thioxophenanthren-10-yloxy)-9-oxa-10-phosphaphenanthren-10-one or -10-oxide ("DOPS-O-DOPO"): 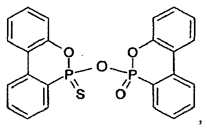 or a ring-opened hydrolyzate thereof.

16. A use of the compounds of any one of claims 1 to 15 as flame retardants, wherein at least one of the compounds is combined with a substrate to be protected.

17. The use according to claim 16, **characterised in that** the at least one compound is used in an amount of 0.1 to 25 % by weight, preferably 3 to 10 % by weight, based on the substrate.

18. The use according to claim 17, **characterised in that** the at least one compound is used in combination with elemental sulfur and/or an additional sulfur-containing compound.

19. The use according to claim 18, **characterised in that** the additional sulfur-containing compound has at least one S-S bond wherein at least one of the sulfur atoms is present in the bivalent form.

20. The use according to any one of claims 16 to 19, **characterised in that** the at least one compound is combined with the substrate in the form of a component of a flame-retardant composition.

21. The use according to any one of claims 16 to 20, **characterised in that** the at least one compound is used as a flame retardant for natural or artificial polymers.

22. A flame-retardant composition comprising at least one compound according to any one of claims 1 to 15 as a flame retardant.

23. The flame-retardant composition of claim 22, **characterised in that** elemental sulfur and/or an additional sulfur-containing compound is/are further contained therein.

24. The flame-retardant composition of claim 23, **characterised in that** the additional sulfur-containing compound has at least one S-S bond wherein at least one of the sulfur atoms is present in the bivalent form.

25. A method of preparing a compound according to any one of claims 1 to 15, **characterised in that** a 9,10-dihydro-9-oxa-10-phosphaphenanthrene derivative selected from DOPO, DOP-Cl, DOPS, DOPS-Cl, DOP-NHPr, DOPS-SH, DOPS-OH and DOPS-SNH(Et)₃ is reacted with elemental sulfur or a sulfur-containing compound or hydrolyzed, wherein the respective reaction is selected from the group consisting of the following reactions a) to t):
a) reacting DOP-Cl with hydrogen sulfide to form DOPS: 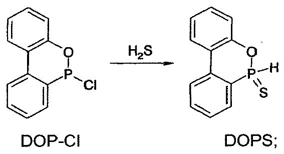
b) reacting DOPO with Lawesson's reagent to form DOPS: 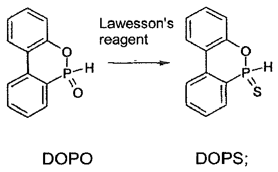
c) reacting DOPO with P₂S₅ to form DOPS: 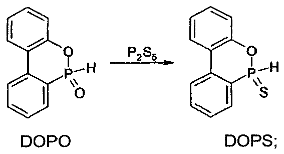
d) reacting DOPS-OH with ammonia to form DOPS-ONH₄: 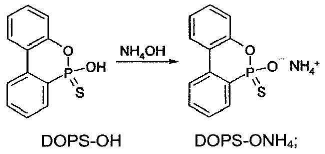
e) reacting DOPO with elemental sulfur to form DOPS-OH: 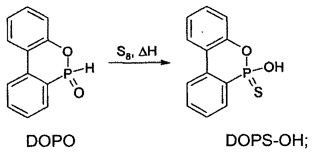
f) reacting DOPO with ammonium thiosulfate to form DOPS-ONH₄: 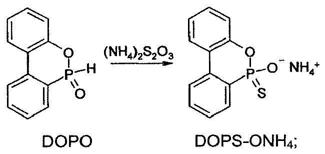
g) reacting DOPS with elemental sulfur to form DOPS-SH: 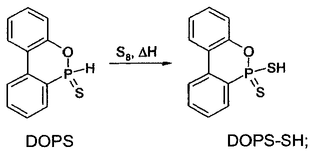
h) reacting DOPO with N,N'-dicaprolactame disulfide (bis(hexahydro-2-oxo-2H-azepin-1-yl)disulfide) to form DOPO-S-DOPO and DOPS-S-DOPO: 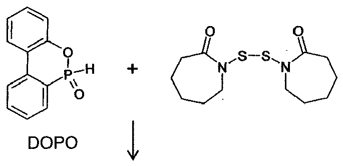 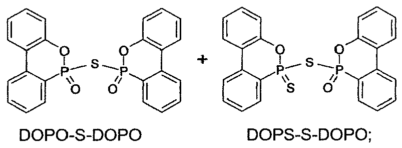
i) reacting DOPS with sulfur and triethylamine to form DOPS-SNH(Et)₃: 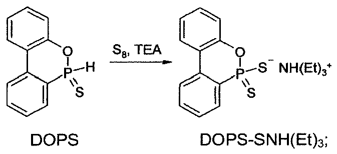
j) reacting DOPS-Cl with sulfur and triethylamine to form DOPS-SNH(Et)₃: 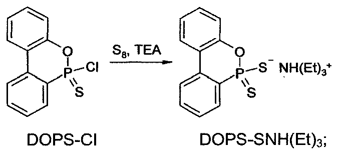
k) reacting DOPS-OH with triethylamine to form DOPS-ONH(Et)₃: 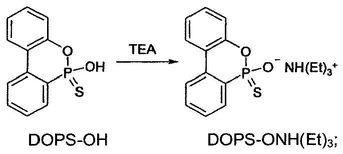
l) reacting DOPS-OH with melamine to form DOPS-OMel: 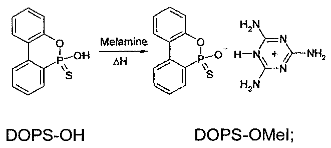
m) reacting DOPS-OH with guanidine carbonate to form DOPS-OGua: 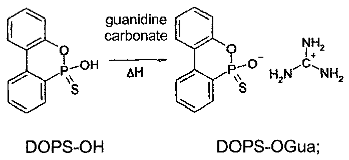
n) dimerization of DOPS-SH to form DOPS-S-DOPS: 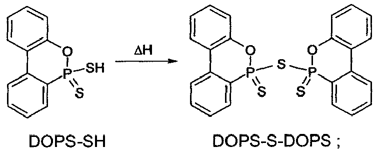
o) reacting DOPS-SNH(Et)₃ with hydrogen peroxide under simultaneous dimerization to form DOPS-S₂-DOPS: 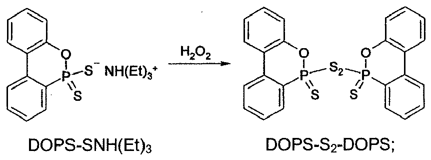
p) reacting of DOPS-SNH(Et)₃ with disulfur dichloride to form DOPS-S₄-DOPS: 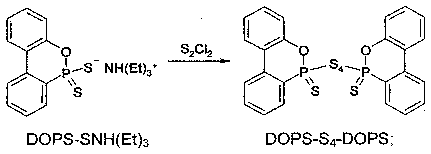
q) reacting DOP-Cl with DOPS-OH and triethylamine as well as with elemental sulfur to form DOPS-O-DOPS: 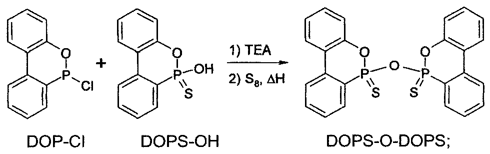
r) reacting DOP-Cl with DOPO-OH and triethylamine as well as with elemental sulfur to form DOPS-O-DOPO: 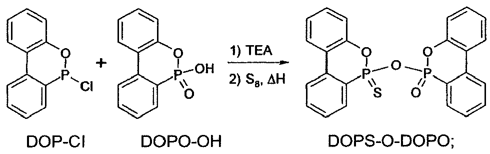
s) reacting DOP-Cl with DOPS-SNH(Et)₃ and with elemental sulfur to form DOPS-S-DOPS: 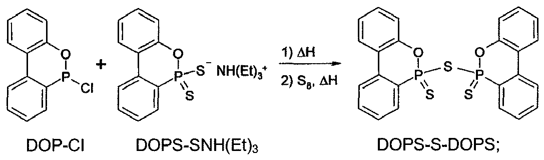 and
t) hydrolyzing DOPS-SNH(Et)₃ with HCl to form DOPS-SH:

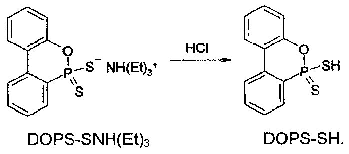

## Revendications

1. Dérivé de 9,10-dihydro-9-oxa-10-phosphaphénanthrène selon la formule I 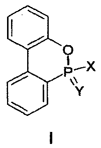 X étant de l'hydrogène et Y du soufre, c'est-à-dire 9,10-dihydro-9-oxa-10-phosphaphénanthrène-10-thione ou -10-sulfure (« DOPS »): 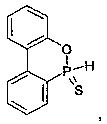 ou un hydrolysat de celui-ci à ouverture de cycle.

2. Dérivé de 9,10-dihydro-9-oxa-10-phosphaphénanthrène selon la formule I, X étant OH et Y du soufre, c'est à dire 9,10-dihydro-10-hydroxy-9-oxa-10-phosphaphénanthrène-10-thione ou -10-sulfure (« DOPS-OH »): 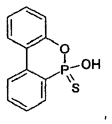 ou un hydrolysat de celui-ci à ouverture de cycle.

3. Dérivé de 9,10-dihydro-9-oxa-10-phosphaphénanthrène selon la formule I, X étant ONH₄ et Y du soufre, c'est à dire 9,10-dihydro-10-hydroxy-9-oxa-10-phosphaphénanthrène-10-thione- ou -10-sulfure-sel d'ammonium (« DOPS-ONH₄ »): 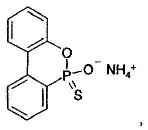 ou un hydrolysat de celui-ci à ouverture de cycle.

4. Dérivé de 9,10-dihydro-9-oxa-10-phosphaphénanthrène selon la formule I, X étant SH et Y du soufre, c'est-à-dire 9,10-dihydro-10-mercapto-9-oxa-10-phosphaphénanthrène-10-thione ou -10-sulfure (« DOPS-SH »): 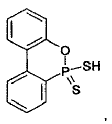 ou un hydrolysat de celui-ci à ouverture de cycle.

5. Dérivé de 9,10-dihydro-9-oxa-10-phosphaphénanthrèn selon la formula 11, X étant SNH(Et)₃ et Y du soufre, c'est à dire 9,10-dihydro-10-mercapto-9-oxa-10-phosphaphénanthrène-10-thione- ou -10-sulfure- sel de triéthylammonium (« DOPS-SNH(Et)₃ »): 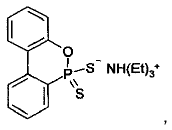 ou un hydrolysat de celui-ci à ouverture de cycle.

6. Dérivé de 9,10-dihydro-9-oxa-10-phosphaphénanthrène selon la formule I, X étant ONH(Et)₃ et Y du soufre, c'est à dire 9,10-dihydro-10-hydroxy-9-oxa-10-phosphaphénanthrène-10-thione- ou -10-sulfure- sel de triéthylammonium (« DOPS-ONH(Et)₃ »): 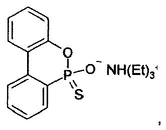 ou un hydrolysat de celui-ci à ouverture de cycle.

7. Dérivé de 9,10-dihydro-9-oxa-10-phosphaphénanthrène selon la formule I, X étant OMel et Y du soufre, c'est à dire 9,10-dihydro-10-hydroxy-9-oxa-10-phosphaphénanthrène-10-thione- ou -10-sulfure-sel de mélaminium (« DOPS-OMel »): 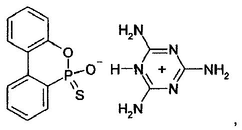 ou un hydrolysat de celui-ci à ouverture de cycle.

8. Dérivé de 9,10-dihydro-9-oxa-10-phosphaphénanthrène selon la formule I, X étant OGua et Y du soufre, c'est à dire 9,10-dihydro-10-hydroxy-9-oxa-10-phosphaphénanthrène-10-thione- ou -10-sulfure-sel de guanidium (« DOPS-OGua »): 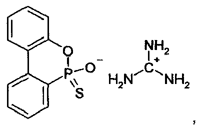 ou un hydrolysat de celui-ci à ouverture de cycle.

9. Dérivé de 9,10-dihydro-9-oxa-10-phosphaphénanthrène selon la formule I, 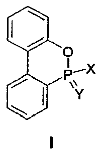 X étant un groupe de lieur bivalent Zₙ reliant deux résidus de dihydrooxaphosphaphénanethrényl selon la formule I en un dimère selon la formule II 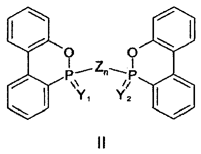 Y₁ et Y₂ étant respectivement de l'oxygène, Z du soufre et n = 1, c'est-à-dire bis(9,10-dihydro-9-oxa-10-oxo-10-phosphaphénanthrène-10-yl)sulfure (« DOPO-S-DOPO »): 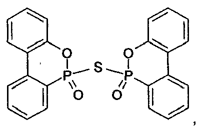 ou un hydrolysat de celui-ci à ouverture de cycle.

10. Dérivé de 9,10-dihydro-9-oxa-10-phosphaphénanthrène selon la formule I, X étant un groupe de lieur bivalent Zₙ reliant deux résidus de dihydrooxaphosphaphénanthrényl selon la formule I en un dimère selon la formule II, Y₁ et Z étant respectivement du soufre, Y₂ de l'oxygène et n = 1, c'est à dire 9,10-dihydro-10-(9,10-dihydro-9-oxa-10-phospha-10-thioxophénanthrène-10-ylthio)-9-oxa-10-phosphaphénanthrène-10-one ou -10-oxyde (« DOPS-S-DOPO »): 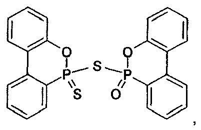 ou un hydrolysat de celui-ci à ouverture de cycle.

11. Dérivé de 9,10-dihydro-9-oxa-10-phosphaphénanthrène selon la formule I, X étant une groupe de lieur bivalent Zₙ reliant deux résidus de dihydrooxaphospha-phénanthrényl selon la formule I en un dimère selon la formule II, Y₁, Y₂ et Z étant respectivement du soufre et n = 1, c'est-à-dire bis(9,10-dihydro-9-oxa-10-phospha-10-thioxophénanthrène-10-yl)sulfure (« DOPS-S-DOPS »): 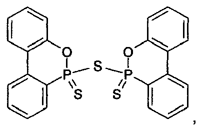 ou un hydrolysat de celui-ci à ouverture de cycle.

12. Dérivé de 9,10-dihydro-9-oxa-10-phosphaphénanthrène selon la formule I, X étant un groupe de lieur bivalent Zₙ reliant deux résidus de dihydrooxaphosphaphénanthrényl selon la formule I en un dimère selon la formule II, Y₁, Y₂ et Z étant respectivement du soufre et n = 2, c'est à dire bis(9,10-dihydro-9-oxa-10-phospha-10-thioxophénanthrène-10-yl)disulfure (« DOPS-S₂-DOPS »): 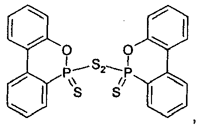 ou un hydrolysat de celui-ci à ouverture de cycle.

13. Dérivé de 9,10-dihydro-9-oxa-10-phosphaphénanthrène selon la formule I, X étant un groupe de lieur bivalent Zₙ reliant deux résidus de dihydrooxaphosphaphénanthrényl selon la formule I en un dimère selon la formule II, Y₁, Y₂ et Z étant respectivement du soufre et n = 4, c'est à dire bis(9,10-dihydro-9-oxa-10-phospha-10-thioxophénanthrène-10-yl)tétrasulfure (« DOPS-S₄-DOPS »): 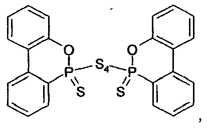 ou un hydrolysat de celui-ci à ouverture de cycle.

14. Dérivé de 9,10-dihydro-9-oxa-10-phosphaphénanthrène selon la formule I, X étant un groupe de lieur bivalent Zₙ reliant deux résidus de dihydrooxaphosphaphénanthrényl selon la formule I en un dimère selon la formule II, Y₁ et Y₂ étant du soufre, Z de l'oxygène et n = 1, c'est à dire di(9,10-dihydro-9-oxa-10-phospha-10-thioxophénanthrène-10-yl)éther (« DOPS-O-DOPS »): 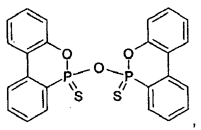 ou un hydrolysat de celui-ci à ouverture de cycle.

15. Dérivé de 9,10-dihydro-9-oxa-10-phosphaphénanthrène selon la formule l1, X étant un groupe de lieur bivalent Zₙ reliant deux résidus de dihydrooxaphosphaphénanthrényl selon la formule I en un dimère selon la formule II, Y₁ étant du soufre, Y₂ et Z respectivement de l'oxygène et n = 1, c'est à dire 9,10-dihydro-10-(9,10-dihydro-9-oxa-10-phospha-10-thioxophénanthrène-10-yloxy)-9-oxa-10-phosphaphénanthrène-10-one ou -10-oxyde ("DOPS-O-DOPO"): 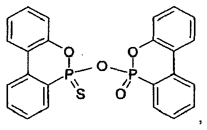 ou un hydrolysat de celui-ci à ouverture de cycle.

16. Utilisation des composés selon une des revendications 1 à 15 comme agent ignifuge, au moins un des composés étant combiné avec un substrat à protéger.

17. Utilisation selon la revendication 16, **caractérisée en ce que** l'au moins un composé est utilisé en une proportion de 0,1 à 25 % en poids, de préférence de 3 à 10 % en poids, par rapport au substrat utilisé.

18. Utilisation selon la revendication 17, **caractérisée en ce que** l'au moins un composé est utilisé en combinaison avec du soufre élémentaire et/ou un autre composé contentant du soufre.

19. Utilisation selon la revendication 18, **caractérisée en ce que** l'autre composé contenant du soufre présente au moins une liaison S-S, au moins un des atomes de soufre étant présent sous forme bivalente.

20. Utilisation selon une des revendications 16 à 19, **caractérisée en ce que** l'au moins un composé est combiné avec le substrat comme composant d'un combinaison retardatrice de flamme.

21. Utilisation selon une des revendications 16 à 20, **caractérisée en ce que** l'au moins un composant est utilisé comme agent ignifuge pour des polymères naturels ou synthétiques.

22. Combinaison retardatrice de flamme contenant au moins un composé selon une des revendications 1 à 15 comme agent ignifuge.

23. Combinaison retardatrice de flamme selon la revendication 22, **caractérisé en ce qu'**en plus il contient du soufre élémentaire et/ou un autre composé contenant du soufre.

24. Combinaison retardatrice de flamme selon la revendication 23, **caractérisée en ce que** l'autre composé contenant du soufre présente au moins une liaison S-S, au moins un des atomes de soufre étant présent sous forme bivalente.

25. Procédé pour produire un composé selon une des revendications 1 à 15, **caractérisé en ce que** un dérivé de 9,10-dihydro-9-oxa-10-phosphaphénanthrène, choisi parmi DOPO, DOP-Cl, DOPS, DOPS-Cl, DOP-NHPr, DOPS-SH, DOPS-OH et DOPS-SNH(Et)₃, est réagit avec du soufre élémentaire ou un composé contenant du soufre ou est hydrolysé, la réaction respective étant choisie parmi le groupe composé des réactions a) à t) suivantes :
a) réaction de DOP-Cl avec du sulfure d'hydrogène produisant DOPS : 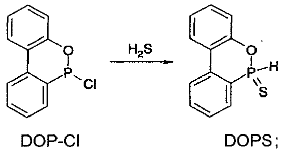
b) réaction de DOPO avec un réactif de Lawesson produisant DOPS : 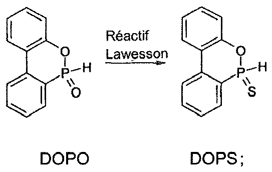
c) réaction de DOPO avec P₂S₅ produisant DOPS : 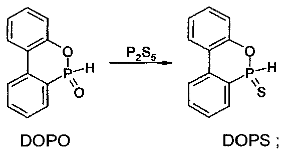
d) réaction de DOPS-OH avec ammoniac produisant DOPS-ONH₄ : 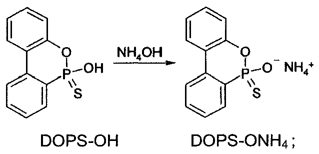
e) réaction de DOPO avec du soufre élémentaire produisant DOPS-OH : 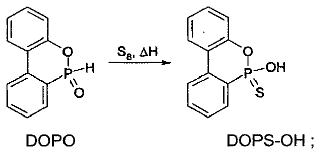
f) réaction de DOPO avec du thiosulfate d'ammonium produisant DOPS-ONH₄ : 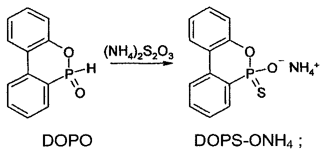
g) réaction de DOPS avec du soufre élémentaire produisant DOPS-SH : 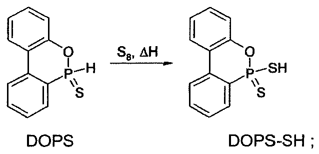
h) réaction de DOPO avec N,N'-dicaprolactamebisulfure (bis(hexahydro-2-oxo-2H-azépin-1-yl)bisulfure) produisant DOPO-S-DOPO et DOPS-S-DOPO : 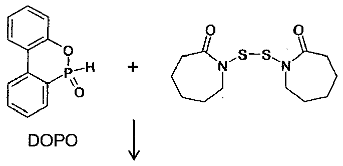 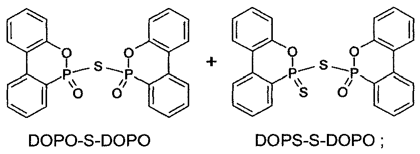
i) réaction de DOPS avec du soufre et de la triéthylamine produisant DOPS-SNH(Et)₃ : 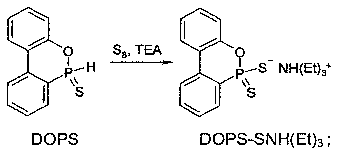
j) réaction de DOPS-CI avec du soufre et de la triéthylamine produisant DOPS-SNH(Et)₃ : 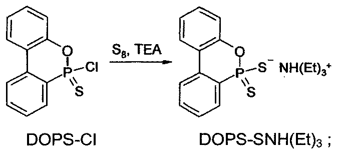
k) réaction de DOPS-OH avec de la triéthylamine DOPS-ONH(Et)₃ : 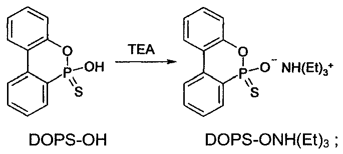
l) réaction de DOPS-OH avec de la mélamine produisant DOPS-OMel : 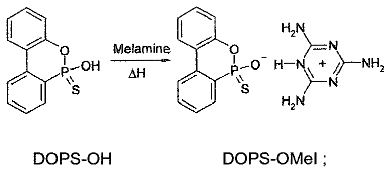
m) réaction de DOPS-OH avec du carbonate de guanidine produisant DOPS-OGua : 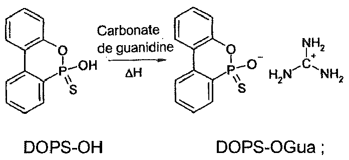
n) dimérisation de DOPS-SH produisant DOPS-S-DOPS: 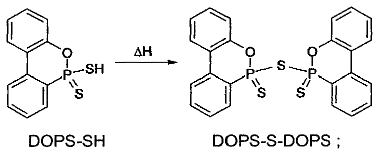
o) réaction de DOPS-SNH(Et)₃ avec du peroxyde de hydrogène et dimérisation simultanée produisant DOPS-S₂-DOPS : 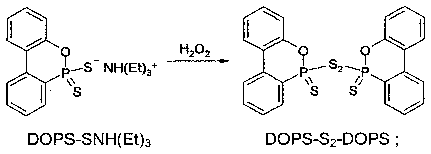
p) réaction de DOPS-SNH(Et)3 avec du dichlorure de disoufre produisant DOPS-S₄-DOPS: 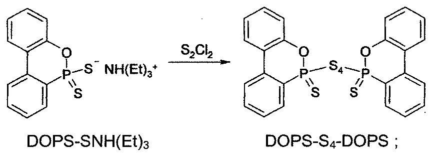
q) réaction de DOP-Cl avec DOPS-OH et de la triéthylamine ainsi qu'avec du soufre élémentaire produisant DOPS-O-DOPS : 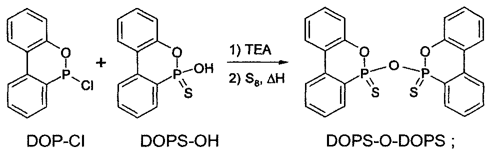
r) réaction de DOP-Cl avec DOPO-OH et de la triéthylamine ainsi qu'avec du sulfure élémentaire produisant DOPS-O-DOPO : 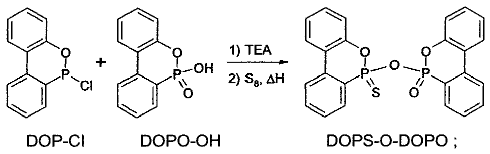
s) réaction de DOP-Cl avec DOPS-SNH(Et)₃ ainsi qu'avec du sulfure élémentaire produisant DOPS-S-DOPS : 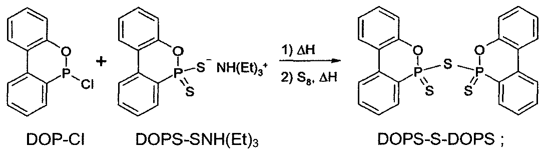 et
t) hydrolyse de DOPS-SNH(Et)₃ avec HCl produisant DOPS-SH :
